# EUROPÄISCHE PATENTSCHRIFT

(11) **EP 3 707 401 B1**
(45) Veröffentlichungstag und Bekanntmachung des Hinweises auf die Patenterteilung: **28.12.2022**
(21) Anmeldenummer: 18811451.6
(22) Anmeldetag: 12.11.2018
(51) Int. Cl.: F16D 1/076, F16D 3/62, F16D 3/72, F16D 3/78

(54) **KUPPLUNGSVORRICHTUNG**
COUPLING DEVICE
DISPOSITIF DE COUPLAGE

(30) Priorität: 10.11.2017 DE 102017010439; 02.10.2018 DE 102018007793
(43) Veröffentlichungstag der Anmeldung: 16.09.2020
(73) Patentinhaber: Süddeutsche Gelenkscheibenfabrik GmbH & Co. KG, 84478 Waldkraiburg (DE); Siemens Mobility GmbH, 81739 München (DE)
(72) Erfinder: HUBER, Armin, 84573 Schoenberg (DE); OUDE KOTTE, Freerk Jacobus, 90547 Stein (DE); EBERLER, Josef, 92318 Neumarkt (DE)
(74) Vertreter: Thum, Bernhard
(86) Internationale Anmeldenummer: PCT/EP2018/080865
(87) Internationale Veröffentlichungsnummer: WO 2019/092230

(56) Entgegenhaltungen:
- WO-A1-2017/009141
- WO-A1-2017/025301
- DE-A1-102014 003 572
- DE-A1-102014 014 490
- DE-A1-102015 016 411
- DE-A1-102016 203 016

## Beschreibung

Die vorliegende Erfindung betrifft eine Kupplungsvorrichtung für einen Fahrzeugantrieb, insbesondere für den Antrieb eines Schienenfahrzeugs.

Ein Anwendungsgebiet einer derartigen Kupplungsvorrichtung können beispielsweise Hochflurfahrzeuge sein. Insbesondere Schienenfahrzeuge können in Form von Hochflurfahrzeugen ausgeführt sein. Unter einem Hochflurfahrzeug ist ein Fahrzeug, insbesondere ein Schienenfahrzeug, zu verstehen, bei dem der Boden des Innenraums im Bereich der Oberkante eines Rades oder oberhalb der Oberkante eines Rades des Fahrzeugs angeordnet ist. Der Boden des Innenraums befindet sich dadurch in etwa auf Höhe des Bahnsteigs. Beispielsweise U-Bahnen werden häufig mit Hochflurfahrzeugen betrieben.

Eine Vielzahl von Schienenfahrzeugen weist eine Motor-Getriebe-Einheit auf, die am Drehgestell oder am Wagenkasten des Schienenfahrzeugs befestigt ist. Der Radsatz ist elastisch am Drehgestell gelagert und mit dem Getriebe der Motor-Getriebe-Einheit gekoppelt. Aufgrund der elastischen Lagerung des Radsatzes am Drehgestell kann es zu Relativbewegungen zwischen dem Drehgestell und dem Radsatz kommen. Bei Schienenfahrzeugen werden diese Relativbewegungen über komplexe Kupplungsvorrichtungen ausgeglichen. Diese komplexen Kupplungsvorrichtungen können beispielsweise in Form einer Keilpaketkupplung ausgebildet sein. Derartige Kupplungsvorrichtungen sind beispielsweise in dem Dokument DE 196 39 304 A1 offenbart. Dieses Dokument offenbart eine elastische Gelenkkupplung mit einem zwischen zwei Kupplungsflanschen angeordneten Zwischenring. Der Zwischenring weist einzelne am Umfang verteilte, in Gummiblöcke einvulkanisierte Metallelemente auf, die wechselseitig mit den Kupplungsflanschen verschraubt sind. Die Metallelemente des Zwischenrings bestehen aus in Umfangsrichtung gleichmäßig verteilten Keilen. Die Keile erstrecken sich in radialer Richtung über die gesamte Ringbreite. Zwischen den Keilen einvulkanisierte Gummiblöcke stehen im eingebauten Zustand in Umfangsrichtung unter Druckvorspannung. Darüber hinaus sind Keilpaketkupplungen aufgrund ihres Aufbaus in der Anschaffung und Herstellung relativ teuer.

Weitere Beispiele für Kupplungsvorrichtungen finden sich in DE102014014490A1 und DE102015016411A1.

Es ist eine Aufgabe der vorliegenden Erfindung, eine Kupplungsvorrichtung der eingangs bezeichneten Art bereitzustellen, die wartungsarm und einfach zu montieren ist, und gleichzeitig einen Ausgleich von Relativbewegungen zwischen einer Motor-Getriebe-Einheit und einem Radsatz eines Fahrzeugs ermöglicht. Es ist eine weitere Aufgabe der vorliegenden Erfindung, eine Kupplungsvorrichtung bereitzustellen, die insbesondere für den abtriebseitigen Einsatz in einem Schienenfahrzeug geeignet ist. Diese Aufgaben werden mit einer Kupplungsvorrichtung für einen Antrieb eines Fahrzeugs, insbesondere einen Antrieb eines Schienenfahrzeug, mit den Merkmalen des Patentanspruchs 1 gelöst.

Weitere Ausführungsformen der Erfindung sind in den abhängigen Ansprüchen angegeben.

Die erfindungsgemäße Kupplungsvorrichtung für einen Fahrzeugantrieb, insbesondere für den Antrieb eines Schienenfahrzeugs umfasst
- wenigstens einen Flansch, wobei der wenigstens eine Flansch einen Befestigungsabschnitt aufweist, über den der wenigstens eine Flansch mit einem Getriebe koppelbar ist,
- wenigstens eine Verbindungseinrichtung, wobei die wenigstens eine Verbindungseinrichtung wenigstens einen Befestigungsabschnitt aufweist, über den die wenigstens eine Verbindungseinrichtung mit wenigstens einem abgetriebenen Element koppelbar ist, und
- wenigstens eine fadenverstärkten Gelenkvorrichtung, die den Flansch und die Verbindungseinrichtung miteinander verbindet,
wobei der wenigstens eine Flansch und die wenigstens eine Verbindungseinrichtung jeweils wenigstens eine Befestigungsfläche aufweisen, an der die wenigstens eine fadenverstärkten Gelenkvorrichtung befestigt ist, wobei der wenigstens eine Flansch, die wenigstens eine Verbindungseinrichtung und die wenigstens eine fadenverstärkte Gelenkvorrichtung derart ausgebildet sind, dass die Kupplungsvorrichtung eine vorbestimmte radiale Steifigkeit aufweist, wobei die wenigstens eine fadenverstärkte Gelenkvorrichtung eine Mehrzahl an Buchsen, wenigstens ein Fadenpaket und wenigstens einen elastischen Körper aufweist, wobei die vorbestimmte radiale Steifigkeit durch die Ausbildung des wenigstens einen Fadenpakets und durch die Anordnung des wenigstens einen Fadenpakets in dem wenigstens einen elastischen Körper einstellbar ist.

Die erfindungsgemäße Kupplungsvorrichtung weist eine vorbestimmte radiale Steifigkeit auf. Dadurch kann die erfindungsgemäße Kupplungsvorrichtung in radialer Richtung wirkende Kräfte aufnehmen. Beispielsweise kann die erfindungsgemäße Kupplungsvorrichtung aufgrund ihrer vorbestimmten radialen Steifigkeit einen Teil der Gewichtskraft von mit der Kupplungsvorrichtung verbundenen Komponenten aufnehmen. Die Gewichtskraft ist eine in der Einbausituation insbesondere in radialer Richtung wirkende Kraft. Beispielsweise kann die Kupplungsvorrichtung einen Teil der Gewichtskraft eines mit der Kupplungsvorrichtung verbundenen Getriebes oder einen Teil der Gewichtskraft einer Motor-Getriebe-Einheit radial abstützen. Ferner kann die Kupplungsvorrichtung auch aus einem Antriebsmoment des Fahrzeugs resultierende Kräfte radial abstützen.

Neben radialen Kräften kann die erfindungsgemäße Kupplungsvorrichtung auch Axialkräfte und Beugemomente aufnehmen. Mit der erfindungsgemäßen Kupplungsvorrichtung können Relativbewegungen zwischen der Motor-Getriebe-Einheit und einem Radsatz des Fahrzeugs ausgeglichen werden. Der Ausgleich von Relativbewegungen findet ausschließlich unter einer elastischen Deformation der wenigstens einen fadenverstärkten Gelenkvorrichtung statt. Die fadenverstärkte Gelenkvorrichtung der erfindungsgemäßen Kupplungsvorrichtung reduziert die ungefederten Massen am Rad bzw. am Radsatz des Fahrzeugs. Die Kupplungsvorrichtung kann so ausgebildet sein, dass sie ausschließlich fadenverstärkte Gelenkvorrichtungen aufweist.

Aufgrund ihrer vorbestimmten radialen Steifigkeit kann die erfindungsgemäße Kupplungsvorrichtung auch die Funktion eines Lagers ausüben. Beispielsweise kann die Kupplungsvorrichtung zur Lagerung einer Motor-Getriebe-Einheit an einem Radsatz dienen.

Darüber hinaus können mit der Kupplungsvorrichtung gemäß der Erfindung sämtliche der eingangs beschriebenen Nachteile der aus dem Stand der Technik bekannten Keilpaketkupplungen ausgeräumt werden, d.h. die Kupplungsvorrichtung gemäß der Erfindung ist weniger wartungsintensiv und einfacher zu montieren.

Die vorbestimmte radiale Steifigkeit wird erfindungsgemäß von der fadenverstärkten Gelenkvorrichtung bereitgestellt. Anders ausgedrückt wird erfindungsgemäß die vorbestimmte radiale Steifigkeit über die Ausbildung der fadenverstärkten Gelenkvorrichtung eingestellt. Dazu weist die fadenverstärkte Gelenkvorrichtung eine Mehrzahl von Buchsen, wenigstens ein Fadenpaket und wenigstens einen elastischen Körper auf. Die vorbestimmte radiale Steifigkeit wird erfindungsgemäß durch die Ausbildung des wenigstens einen Fadenpakets und auch durch die Anordnung des wenigstens einen Fadenpakets in dem elastischen Körper eingestellt. Das wenigstens eine Fadenpaket kann benachbarte Buchsen kraftübertragend koppeln. Eine an einer Buchse angeordnete Stützeinrichtung kann das wenigstens eine Fadenpaket axial führen. Das wenigstens eine Fadenpaket, die Buchsen und die Stützeinrichtung sind in den wenigstens einen elastischen Körper zumindest teilweise eingebettet. Die Stützeinrichtung kann von Bundelementen gebildet werden, die scheibenförmig und/oder im Querschnitt L-förmig ausgebildet sein können. Das wenigstens eine Fadenpaket kann aus einzelnen laschenförmig gewickelten Fäden oder aus einer Mehrzahl von laschenförmig gewickelten Einzelfäden bestehen. Der wenigstens eine elastische Körper kann insbesondere auch zur Aufnahme von Druckkräften dienen und damit ebenfalls zur Einstellung der vorbestimmten radialen Steifigkeit beitragen, die im Betrieb der fadenverstärkten Gelenkvorrichtung auftreten können. Der wenigstens eine elastische Körper kann beispielsweise aus einem Elastomer, einem thermoplastischen Elastomer, einem Polymer oder Gummi hergestellt sein.

Die wenigstens eine fadenverstärkte Gelenkvorrichtung kann mehrere elastische Kupplungskörper aufweisen. Die Kupplungskörper weisen einen elastischen Körper auf, in den jeweils wenigstens ein Fadenpaket eingebettet sein kann. Zur Bildung der fadenverstärkten Gelenkvorrichtung werden mehrere elastische Körper beispielsweise über Buchsen miteinander verbunden. Eine derartige fadenverstärkte Gelenkvorrichtung kann beispielsweise als Laschenkupplung bezeichnet werden.

Ferner kann die wenigstens eine fadenverstärkte Gelenkvorrichtung einen elastischen Körper aufweisen, in dem eine Mehrzahl von laschenförmigen Fadenpaketen angeordnet sind. Die laschenförmigen Fadenpakete können dabei ringförmig angeordnet und jeweils über eine Buchse miteinander verbunden sein. Derartige Gelenkvorrichtungen werden auch als Gelenkscheibe oder als Laschenring bezeichnet.

Die erfindungsgemäße Kupplungsvorrichtung ist insbesondere zum abtriebseitigen Einsatz in einem Fahrzeug ausgebildet. Unter dem Begriff "abtriebseitig" ist zu verstehen, dass die Kupplungsvorrichtung zwischen der Ausgangswelle des Getriebes und dem Radsatz angeordnet ist. Beispielsweise kann die erfindungsgemäße Kupplungsvorrichtung mit der Ausgangswelle des Getriebes und der Radsatzwelle eines Radsatzes gekoppelt werden. Ferner kann die erfindungsgemäße Kupplungsvorrichtung auch mit der Ausgangswelle des Getriebes und einem der Räder eines Radsatzes gekoppelt werden. Mit anderen Worten kann das wenigstens eine abgetriebene Element entweder die Radsatzwelle oder ein Rad des Radsatzes sein.

Die wenigstens eine Verbindungseinrichtung kann einen Flansch aufweisen. Der wenigstens eine Flansch zur Kopplung mit dem Getriebe kann einen ersten Flansch der Kupplungsvorrichtung bilden. Der Flansch der Verbindungseinrichtung kann einen zweiten Flansch der Kupplungsvorrichtung bilden. Die Befestigungsflächen des ersten Flansches und des zweiten Flansches können in einer Ebene liegen. Die Befestigungsflächen des ersten Flansches und des zweiten Flansches können derselben axialen Seite der wenigstens einen fadenverstärkten Gelenkvorrichtung zugewandt sein. Der Befestigungsabschnitt des ersten Flansches und der Befestigungsabschnitt des zweiten Flansches können in axialer Richtung zueinander versetzt sein.

Der erste Flansch kann den zweiten Flansch zur Kopplung mit der fadenverstärkten Gelenkvorrichtung umgreifen, d.h. der erste Flansch greift in den zweiten Flansch ein, um mit der fadenverstärkten Gelenkvorrichtung gekoppelt werden zu können. Der erste Flansch und der zweite Flansch können in axialer Richtung der Kupplungsvorrichtung hintereinander angeordnet sein. Insbesondere die Befestigungsabschnitte der Flansche können in axialer Richtung zueinander versetzt sein. Zwischen dem Befestigungsabschnitt des ersten Flansches und dem zweiten Flansch kann sich ein vorbestimmter axialer Abstand einstellen. Der erste Flansch kann dabei den zweiten Flansch zumindest abschnittsweise aufnehmen, so dass die Befestigungsflächen beider Flansche in einer Ebene liegen bzw. eine Ebene definieren.

Der erste Flansch kann eine Vielzahl von Flanscharmen aufweisen. Die Flanscharme können sich ausgehend von dem Befestigungsabschnitt in Richtung der fadenverstärkten Gelenkvorrichtung erstrecken. Jeder Flanscharm kann wenigstens eine Befestigungsfläche aufweisen. Der zweite Flansch kann eine Vielzahl von Flanscharmen aufweisen. Die Flanscharme können sich ausgehend von dem Befestigungsabschnitt in Richtung der fadenverstärkten Gelenkvorrichtung erstrecken. Auch jeder Flanscharm des zweiten Flansches kann wenigstens eine Befestigungsfläche aufweisen.

Ausgehend von dem Befestigungsabschnitt können sich die Flanscharme des ersten Flansches abgewinkelt in Richtung der fadenverstärkten Gelenkvorrichtung erstrecken. Jeder Flanscharm des ersten Flansches kann einen sich in axialer Richtung erstreckenden Abschnitt aufweisen. An dem sich in axialer Richtung erstreckenden Abschnitt kann wenigstens eine Befestigungsfläche ausgebildet sein. Die Befestigungsfläche kann an einer Stirnseite des axialen Abschnitts des Flanscharms ausgebildet sein. Die sich in axialer Richtung erstreckenden Abschnitte weisen jeweils eine Öffnung zur Verbindung mit der fadenverstärkten Gelenkvorrichtung auf. Die Öffnungen erstrecken sich ausgehend von den Befestigungsflächen in die axialen Abschnitte hinein. Die Öffnungen können ein Innengewinde aufweisen. Die axialen Abschnitte können ferner an den Befestigungsflächen im Bereich der Öffnungen eine Ausnehmung aufweisen, die abschnittsweise eine Buchse der fadenverstärkten Gelenkvorrichtung aufnehmen kann. Die Stirnseite der Buchse kann sich axial an der Ausnehmung abstützen, wenn die fadenverstärkte Gelenkvorrichtung mit dem ersten Flansch verbunden ist.

Die Flanscharme des zweiten Flansches können in axialer Richtung zwischen dem Befestigungsabschnitt des ersten Flansches und einer axialen Seite der fadenverstärkten Gelenkvorrichtung angeordnet sein. Die sich in axialer Richtung erstreckenden Abschnitte der Flanscharme des ersten Flansches können in Umfangsrichtung der fadenverstärkten Gelenkvorrichtung zwischen den Flanscharmen des zweiten Flansches angeordnet sein. Die Flanscharme des zweiten Flansches können sich von dem Befestigungsabschnitt in radialer Richtung weg erstrecken. Die Flanscharme des zweiten Flansches können zwischen zwei in Umfangsrichtung benachbarten axialen Abschnitten der Flanscharme des ersten Flansches radial vorstehen. Die Flanscharme des zweiten Flansches können sich sternförmig von dessen Befestigungsabschnitt weg erstrecken.

Die fadenverstärkte Gelenkvorrichtung kann über Befestigungsmittel mit dem ersten Flansch und dem zweiten Flansch gekoppelt sein. Die Befestigungsmittel können sich ausgehend von einer axialen Seite der fadenverstärkten Gelenkvorrichtung durch die fadenverstärkte Gelenkvorrichtung in Richtung der Befestigungsflächen des ersten Flansches und des zweiten Flansches an der entgegengesetzten axialen Seite der fadenverstärkten Gelenkvorrichtung erstrecken. Die Befestigungsmittel können vorzugsweise Kopfschrauben sein. Die Schraubenköpfe dieser Schrauben legen sich an die axiale Seite der fadenverstärkten Gelenkvorrichtung an, die den Befestigungsflächen der Flansche abgewandt ist. Die fadenverstärkte Gelenkvorrichtung kann zwischen den Schraubenköpfen und den Befestigungsflächen der beiden Flansche geklemmt und damit an den Flanschen befestigt werden.

Der Befestigungsabschnitt des zweiten Flansches kann sich durch die fadenverstärkte Gelenkvorrichtung erstrecken. Der Befestigungsabschnitt des zweiten Flansches kann rohrförmig ausgebildet sein. Die fadenverstärkte Gelenkvorrichtung kann sich außen um den rohrförmigen Befestigungsabschnitt des zweiten Flansches herum erstrecken. Die axiale Erstreckung des rohrförmigen Befestigungsabschnitts kann größer als die axiale Erstreckung der fadenverstärkten Gelenkvorrichtung sein, die sich um den rohrförmigen Befestigungsabschnitt herum erstreckt. Die Flanscharme des zweiten Flansches können sich von einem axialen Ende des rohrförmigen Befestigungsabschnitts in radialer Richtung weg erstrecken. Der Befestigungsabschnitt des zweiten Flansches kann mit einem Befestigungsvorsprung der Radsatzwelle eines Radsatzes verbunden sein. Beispielsweise kann der zweite Flansch mit seinem Befestigungsabschnitt auf den Befestigungsvorsprung der Radsatzwelle aufgepresst sein.

Die Befestigungsflächen an den Flanscharmen des zweiten Flansches sind an einer axialen Fläche der Flanscharme vorgesehen, die dem Befestigungsabschnitt des ersten Flansches abgewandt ist. Die Flanscharme des zweiten Flansches können Öffnungen aufweisen, die zur Verbindung der fadenverstärkten Gelenkvorrichtung mit dem zweiten Flansch dienen. Dazu können die Befestigungsöffnungen ein Innengewinde aufweisen, in das eine Schraube eingeschraubt werden kann. Die Befestigungsflächen des zweiten Flansches können Vorsprünge aufweisen, die abschnittsweise eine Buchse der fadenverstärkten Gelenkvorrichtung aufnehmen. Die Vorsprünge können sich um eine der Öffnungen herum erstrecken, sodass sich die Buchse mit ihrer Stirnseite an dem zweiten Flansch abstützen kann.

Der Befestigungsabschnitt des ersten Flansches kann eine Verzahnung aufweisen. Der Befestigungsabschnitt des ersten Flansches kann ringförmig ausgebildet sein. Die Verzahnung kann an einer Stirnseite des ringförmigen Befestigungsabschnitts ausgebildet sein. Die Verzahnung an dem Befestigungsabschnitt ist korrespondierend zu einer Verzahnung an der Getriebeausgangswelle der Motor-Getriebeeinheit des Fahrzeugs ausgebildet.

Ferner kann der Befestigungsabschnitt des ersten Flansches eine oder mehrere Schraubenöffnungen aufweisen. Über diese Schraubenöffnungen kann der erste Flansch bzw. dessen Befestigungsabschnitt mit der Stirnseite der Getriebeausgangswelle verschraubt werden. Der Befestigungsabschnitt des ersten Flansches und die Getriebeausgangswelle weisen den gleichen Innendurchmesser auf. Durch den Befestigungsabschnitt des ersten Flansches und die rohrförmige Getriebeausgangswelle erstreckt sich die Radsatzwelle. Die Radsatzwelle ist jedoch nicht mit dem Befestigungsabschnitt des ersten Flansches verbunden. Der Innendurchmesser des Befestigungsabschnitts des ersten Flansches kann größer als der Innendurchmesser des Befestigungsabschnitts des zweiten Flansches sein. Der Innendurchmesser des Befestigungsabschnitts des ersten Flansches kann kleiner als der Außendurchmesser der Radsatzwelle im Bereich des Befestigungsvorsprungs sein.

Jeder Flanscharm des ersten Flansches und des zweiten Flansches kann jeweils eine erste und eine zweite Befestigungsfläche aufweisen. Die ersten Befestigungsflächen können an einer axialen Seite der Flanscharme und die zweiten Befestigungsflächen können an der entgegengesetzten axialen Seite der Flanscharme ausgebildet sein, d.h. die ersten und zweiten Befestigungsflächen sind einander entgegengesetzt. Die fadenverstärkte Gelenkvorrichtung kann an den Befestigungsflächen an den entgegengesetzten axialen Seiten der Flanscharme des ersten Flansches und des zweiten Flansches derart angeordnet sein, dass die ersten Befestigungsflächen der Flanscharme des ersten Flansches und des zweiten Flansches einer axialen Seite der fadenverstärkten Gelenkvorrichtung und die zweiten Befestigungsflächen der Flanscharme des ersten Flansches und des zweiten Flansch einer anderen axialen Seite der fadenverstärkten Gelenkvorrichtung zugewandt sind. Jeweils eine Ebene von Kupplungskörpern der fadenverstärkten Gelenkvorrichtung kann an den ersten Befestigungsflächen und an den zweiten Befestigungsflächen angeordnet sein, so dass die die Flanscharme in axialer Richtung zwischen den Ebenen von Kupplungskörpern angeordnet sind.

Die wenigstens eine Verbindungseinrichtung kann eine Vielzahl von Verbindungselementen aufweisen, die zur Verbindung mit dem abgetriebenen Element dienen. Das abgetriebene Element kann in diesem Fall beispielsweise das Rad eines Radsatzes sein. Die einzelnen Verbindungselemente können sich an die fadenverstärkte Gelenkvorrichtung und das Rad anlegen. Die fadenverstärkte Gelenkvorrichtung kann mit dem Rad verschraubt sein, wobei sich die dafür verwendeten Schrauben durch die Verbindungselemente erstrecken.

Die vorliegende Erfindung betrifft ein Drehgestell mit einer Kupplungsvorrichtung gemäß der voranstehend beschriebenen Art. Das Drehgestell kann eine Motor-Getriebe-Einheit aufweisen. Die Motor-Getriebe-Einheit kann über wenigstens ein fadenverstärktes Lagerelement oder über wenigstens ein Federelement an dem Drehgestell gelagert sein. Das Drehgestell kann einen Radsatz mit einer Radsatzwelle und zwei Rädern aufweisen. Die Verbindungseinrichtung der Kupplungsvorrichtung kann die Kupplungsvorrichtung mit der Radsatzwelle oder einem der beiden Räder des Radsatzes koppeln. Ferner betrifft die vorliegende Erfindung auch ein Schienenfahrzeug mit einem derartigen Drehgestell oder einer Motor-Getriebe-Einheit.

Das fadenverstärkte Lagerelement kann wenigstens ein Fadenpaket aufweisen. Das wenigstens eine fadenverstärkte Lagerelement kann in x-Richtung, y-Richtung und in z-Richtung unterschiedliche Steifigkeiten bereitstellen, um die Relativbewegungen der Motor-Getriebe-Einheit und/oder des Radsatzes relativ zu dem Drehgestell ausgleichen zu können. In z-Richtung kann das fadenverstärkte Lagerelement beispielsweise eine hohe Steifigkeit aufweisen, da das fadenverstärkte Lagerelement in z-Richtung auf Zug belastet wird. In γ-Richtung kann das fadenverstärkte Lagerelement beispielsweise weniger steif als in z-Richtung sein, da das wenigstens eine fadenverstärkte Lagerelement in γ-Richtung nur geringfügig auf Zug belastet wird. In x-Richtung kann das fadenverstärkte Lagerelement eine relativ geringe Steifigkeit aufweisen, um relativ große Auslenkungen des Radsatzes und/oder der Motor-Getriebe-Einheit relativ zu dem Drehgestell in x-Richtung zulassen bzw. aufnehmen zu können. Die wenigstens eine Motor-Getriebe-Einheit kann sich über die wenigstens eine Kupplungsvorrichtung an dem Radsatz abstützen.

Das wenigstens eine Fadenpaket kann derart ausgebildet sein, das es sich abgewinkelt erstreckt. Beispielsweise kann das wenigstens eine Fadenpaket wenigstens zwei Buchsen umschlingen und von einer dritten Buchse umgelenkt werden. Die dritte Buchse kann zwischen den beiden von dem wenigstens einen Fadenpaket umschlungen Buchsen angeordnet sein und das wenigstens eine Fadenpaket in eine abgewinkelte Form mit zwei Schenkeln bringen, die mit einem vorbestimmten Winkel zueinander verlaufen. Die wenigstens zwei Fadenpakete des fadenverstärkten Lagerelements können sich mit einem vorbestimmten Winkel zueinander erstrecken. Über den vorbestimmten Winkel, mit dem sich die wenigstens zwei Fadenpakete zueinander erstrecken, kann die Steifigkeit des fadenverstärkten Lagerelements in einer oder mehreren Richtungen von x-Richtung, γ-Richtung und z-Richtung eingestellt werden. Insbesondere kann die Steifigkeit in z-Richtung und γ-Richtung über den vorbestimmten Winkel der Fadenpakete zueinander eingestellt werden, mit dem sich die Fadenpakete zueinander erstrecken. Das fadenverstärkte Lagerelement kann einen elastischen Körper aufweisen. Die wenigstens zwei Fadenpakete können sich mit dem vorbestimmten Winkel in dem elastischen Körper erstrecken.

Die wenigstens zwei Fadenpakete können einer gemeinsamen Befestigungsöffnung zugeordnet sein und sich ausgehend von dieser Befestigungsöffnung mit einem vorbestimmten Winkel zueinander erstrecken. Ausgehend von der gemeinsamen Befestigungsöffnung können sich die beiden Fadenpakete in Richtung von wenigstens zwei weiteren Befestigungsöffnungen erstrecken. Die Befestigungsöffnungen können in dem elastischen Körper ausgebildet sein. Ein Fadenpaket kann im Bereich zwischen den beiden Befestigungsöffnungen, denen das Fadenpaket zugeordnet ist, zwei im Wesentlichen zueinander parallele Stränge ausbilden. Das wenigstens eine Fadenpaket kann sich derart in dem elastischen Körper erstrecken, dass die Stränge der wenigstens zwei Fadenpakete zumindest abschnittsweise mit einem vorbestimmten Winkel zueinander verlaufen. Ausgehend von der gemeinsamen Befestigungsöffnung können sich zumindest zwei der Stränge der wenigstens zwei Fadenpakete kreuzen. Die sich kreuzenden Stränge der wenigstens zwei Fadenpakete können sich mit dem vorbestimmten Winkel zueinander erstrecken.

Das wenigstens eine fadenverstärkte Lagerelement kann wenigstens einen Abschnitt des Drehgestells mit der wenigstens einen Motor-Getriebe-Einheit verbinden. Das wenigstens eine fadenverstärkte Lagerelement kann eine Aufhängung für die Motor-Getriebe-Einheit bilden. Das fadenverstärkte Lagerelement kann sich insbesondere in z-Richtung zwischen dem Drehgestell und der Motor-Getriebe-Einheit erstrecken. Das Drehgestell kann wenigstens eine Lagerstelle zur Befestigung des Lagerelements aufweisen. Das wenigstens eine fadenverstärkte Lagerelement kann mit einem querlaufenden Rahmenelement mit der Motor-Getriebe-Einheit verbunden sein, an dem die wenigstens eine Lagerstelle ausgebildet ist. Die wenigstens eine Motor-Getriebe-Einheit kann wenigstens eine Lagerstelle zur Verbindung mit dem wenigstens einen fadenverstärkten Lagerelement aufweisen. Die wenigstens eine Lagerstelle kann an der dem Radsatz abgewandten Seite der Motor-Getriebe-Einheit angeordnet sein. Die wenigstens eine Lagerstelle kann dem quer verlaufenden Rahmenelements zugewandt sein. Das wenigstens eine fadenverstärkte Lagerelement kann über Verbindungsmittel mit der wenigstens einen Lagerstelle der Motor-Getriebe-Einheit und dem Drehgestell verbunden sein. Zumindest das Getriebe der wenigstens einen Motor-Getriebe-Einheit kann achsreitend angeordnet sein. Der wenigstens eine Radsatz kann eine Radsatzwelle aufweisen. Die Radsatzwelle kann zwei Räder des Radsatzes miteinander verbinden.

Die wenigstens zwei Fadenpakete können sich mit einem vorbestimmten Winkel in dem wenigstens einen elastischen Körper erstrecken. Der vorbestimmte Winkel kann beispielsweise zwischen 5° und 175° betragen. Vorzugsweise kann der vorbestimmte Winkel ein spitzer Winkel sein. Der vorbestimmte Winkel kann zwischen 5° und 45° betragen. Über den vorbestimmten Winkel, mit dem sich die wenigstens zwei Fadenpakete zueinander erstrecken, können die Steifigkeit des fadenverstärkten Lagerelements in einer oder mehreren Richtungen von x-Richtung, γ-Richtung und z-Richtung eingestellt werden. Insbesondere kann die Steifigkeit in z-Richtung und γ-Richtung über den vorbestimmten Winkel eingestellt werden, mit dem sich die Fadenpakete zueinander erstrecken.

Das Lagerelement kann derart ausgebildet sein, dass es in z-Richtung eine hohe Steifigkeit und in x-Richtung eine geringere Steifigkeit aufweist. Ferner kann das Lagerelement derart ausgebildet sein, dass die Steifigkeit in γ-Richtung zwischen der Steifigkeit in x-Richtung und der Steifigkeit in z-Richtung liegt.

Die Befestigungsöffnungen können an vorbestimmten Befestigungsstellen in dem elastischen Körper des Lagerelements ausgebildet werden, die in Abhängigkeit der Befestigungsstellen an den über das Lagerelement zu verbindenden Einheiten des Fahrzeugs und in Abhängigkeit der auszugleichenden Relativbewegungen festgelegt werden. Anders ausgedrückt können die Positionen der Befestigungsöffnungen und damit auch die Erstreckung der Fadenpakete in dem elastischen Körper in Abhängigkeit der von dem Lagerelement aufzunehmenden Kräfte festgelegt werden. Vorzugsweise kann das Lagerelement über den Winkel zwischen den Fadenpaketen auf die aufzunehmenden Kräfte in unterschiedlichen Richtungen abgestimmt werden. Anders ausgedrückt, kann über den Winkel zwischen den Fadenpaketen die Steifigkeit des Lagerelements zumindest in γ-Richtung und z-Richtung eingestellt werden. In Abhängigkeit des Winkels kann das Lagerelement somit zumindest in γ-Richtung und z-Richtung steifer oder weniger steif sein.

Wenigstens zwei Fadenpakete der Mehrzahl der Fadenpakete können sich derart in dem elastischen Körper erstrecken, dass die beiden Fadenpakete zumindest drei Befestigungsöffnungen miteinander koppeln. Anders ausgedrückt können sich die Fadenpakete mit einem vorbestimmten Winkel zueinander in dem elastischen Körper erstrecken, um die drei Befestigungsöffnungen zugkraftübertragend miteinander zu verbinden. Die drei Befestigungsöffnungen können beispielsweise in Form eines gedachten Dreiecks angeordnet sein, wobei sich die beiden Fadenpakete zwischen den Befestigungsöffnungen erstrecken. Die Fadenpakete können sich somit in einem vorbestimmten Winkel zueinander versetzt in dem elastischen Körper erstrecken. Wenigstens einer Befestigungsöffnung können wenigstens zwei Fadenpakete zugeordnet sein. Die beiden Fadenpakete können zusammen eine Befestigungsöffnung umgeben. Ausgehend von dieser Befestigungsöffnung können sich die beiden Fadenpakete jeweils in Richtung einer der weiteren Befestigungsöffnungen erstrecken.

Die Befestigungsöffnungen in dem elastischen Körper müssen nicht allesamt über Fadenpakete miteinander gekoppelt werden. Es können Befestigungsöffnungen vorgesehen sein, die ausschließlich über den elastischen Körper miteinander verbunden sind. Zumindest zwei Befestigungsöffnungen können einem einzigen Fadenpaket zugeordnet sein. Es können Befestigungsöffnungen paarweise über jeweils ein Fadenpaket gekoppelt werden. Die paarweise über ein Fadenpaket gekoppelten Befestigungsöffnungen können mit jeweils einem anderen von einem Fadenpaket gebildeten Befestigungsöffnungspaar ausschließlich über den elastischen Körper verbunden sein. Der Aufbau des Lagerelements mit seinen Fadenpaketen und Befestigungsöffnungen kann von den von dem Lagerelement aufzunehmenden Kräften und den Befestigungsstellen für das Lagerelement an den Einheiten des Fahrzeugs abhängen.

Jede Befestigungsöffnung kann eine Buchse aufweisen. Die Buchse kann von wenigstens einem Fadenpaket umschlungen sein. An jeder Buchse können wenigstens zwei Bundelemente vorgesehen sein, die das wenigstens eine Fadenpaket in axialer Richtung an der Buchse abstützen. Die Bundelemente können als im Querschnitt L-förmige Kragen oder scheibenförmig ausgebildet sein. Ferner kann wenigstens ein Bundelement integral mit der Buchse ausgebildet sein. Das integrale Bundelement kann sich von der Außenumfangsfläche der Buchse weg erstrecken. Der Querschnitt des integralen Bundelements kann sich zur Außenumfangskante des integralen Bundelements verringern.

Zumindest eine Buchse kann von einem ersten Fadenpaket und einem zweiten Fadenpaket umschlungen werden. Das erste Fadenpaket und das zweite Fadenpaket können sich ausgehend von dieser Buchse bzw. Befestigungsöffnung jeweils in Richtung einer weiteren Befestigungsöffnung mit einer Buchse erstrecken. Das erste Fadenpaket und das zweite Fadenpaket können in axialer Richtung zueinander versetzt die Buchse umschlingen. Das erste Fadenpaket und das zweite Fadenpaket können sich mit diesem axialen Versatz durch den elastischen Körper erstrecken. Das erste Fadenpaket kann sich in Richtung einer anderen Buchse erstrecken als das zweite Fadenpaket. Die beiden Buchsen können um einen vorbestimmten Winkel um die Mittelachse der Buchse zueinander versetzt angeordnet sein, die von dem ersten Fadenpaket und dem zweiten Fadenpaket umschlungen wird. Dieser vorbestimmte Winkel kann zwischen 5° und 175° betragen. Auch dieser Winkel kann vorzugsweise ein spitzer Winkel sein. Dieser Winkel kann zwischen 5° und 45° betragen. Der Winkel, um den die beiden Buchsen zueinander versetzt angeordnet sind, kann im Wesentlichen dem Winkel entsprechen, mit dem sich die beiden Fadenpakete zueinander erstrecken.

Ferner können in einem Lagerelement mehrere Buchsen vorgesehen sein, die von zwei Fadenpaketen umschlungen werden, wobei sich die beiden Fadenpakete in Richtung jeweils einer weiteren Buchse erstrecken. Die jeweils drei über die Fadenpakete miteinander verbundenen Buchsen können untereinander beispielsweise ausschließlich über den elastischen Körper miteinander verbunden sein. Zwischen dem ersten Fadenpaket und dem zweiten Fadenpaket kann ein Bundelement vorgesehen sein, das die beiden Fadenpakete voneinander trennt. Dadurch kann unter anderem verhindert werden, dass die Fadenpakete aneinander reiben.

Die sich in dem elastischen Körper erstreckenden Fadenpakete können in axialer Richtung der Buchsen unterschiedliche Querschnitte aufweisen. Ein oder mehrere Fadenpakete können einen größeren oder kleineren Querschnitt als die übrigen Fadenpakete aufweisen. Die Größe des Querschnitts der Fadenpakete kann in Abhängigkeit der in diesem Bereich des fadenverstärkten Lagerelements auftretenden Zugkräfte gewählt werden. Ferner können sich die Fadenpakete ebenfalls in ihrer Länge unterscheiden.

An wenigstens einer der Buchsen kann ein Distanzstück angeordnet sein, um eine gemeinsame Befestigungsebene mit einer benachbarten Buchse herzustellen. Das Distanzstück kann zum Ausgleich des axialen Versatzes zwischen den Fadenpaketen und den von den Fadenpaketen umschlungenen Buchsen dienen. Dadurch kann eine gemeinsame Befestigungsebene hergestellt werden, in der zumindest die Stirnflächen unmittelbar benachbarter Buchsen liegen. Das Distanzstück kann einen Abstand oder eine Distanz in axialer Richtung der Buchsen zwischen den axialen Stirnflächen benachbarter Buchsen überbrücken, so dass die axiale Stirnfläche des Distanzstücks mit einer axialen Stirnfläche der benachbarten Buchse in einer Ebene liegt. Diese Ebene kann sich senkrecht zur Mittelachse der Buchsen bzw. des Distanzstücks erstrecken.

Die Fadenpakete des fadenverstärkten Lagerelements können sich zumindest abschnittsweise zueinander versetzt in dem elastischen Körper erstrecken. Die Fadenpakete können sich um einen vorbestimmten Winkel und/oder in axialer Richtung zueinander versetzt in dem elastischen Körper erstrecken. Die parallelen Stränge eines laschenförmigen Fadenpakets können mit einem vorbestimmten Winkel zu den parallelen Strängen eines weiteren laschenförmigen Fadenpakets verlaufen.

Im Folgenden wird eine beispielhafte Ausführungsform mit Bezug auf die beigefügten Figuren beschrieben. Es stellen dar:
- Fig. 1: eine perspektivische Ansicht einem Motor-Getriebe-Einheit mit einer Kupplungsvorrichtung gemäß einer ersten Ausführungsform;
- Fig. 2: eine Draufsicht der Motor-Getriebe-Einheit mit der Kupplungsvorrichtung gemäß der ersten Ausführungsform;
- Fig. 3: eine Vorderansicht der Motor-Getriebe-Einheit mit der Kupplungsvorrichtung gemäß der ersten Ausführungsform, die den Verlauf der Schnittlinie IV-IV veranschaulicht;
- Fig. 4: eine Schnittansicht entlang der Schnittlinie IV-IV in Figur 3;
- Fig. 5: eine perspektivische Ansicht einer Variante einer Kupplungsvorrichtung gemäß der ersten Ausführungsform;
- Fig. 6: eine Draufsicht der Kupplungsvorrichtung gemäß Figur 5;
- Fig. 7: eine perspektivische Ansicht einer Kupplungsvorrichtung gemäß einer zweiten Ausführungsform;
- Fig. 8: eine Draufsicht der Kupplungsvorrichtung gemäß der zweiten Ausführungsform;
- Fig. 9: eine Schnittansicht der Kupplungsvorrichtung gemäß der zweiten Ausführungsform entlang der Schnittlinie IX-IX in Figur 8;
- Fig. 10: eine perspektivische Ansicht einer Kupplungsvorrichtung gemäß einer dritten Ausführungsform;
- Fig. 11: eine Draufsicht der Kupplungsvorrichtung gemäß der dritten Ausführungsform;
- Fig. 12: eine Schnittansicht entlang der Schnittlinie XII-XII in Fig. 11;
- Fig. 13: eine perspektivische Ansicht einem Motor-Getriebe-Einheit mit einer Kupplungsvorrichtung gemäß einer vierten Ausführungsform;
- Fig. 14: eine weitere perspektivische Ansicht der Motor-Getriebe-Einheit mit der Kupplungsvorrichtung gemäß der vierten Ausführungsform;
- Fig. 15: eine Draufsicht der Motor-Getriebe-Einheit mit der Kupplungsvorrichtung gemäß der vierten Ausführungsform;
- Fig. 16 bis 19: Ansichten eines fadenverstärkten Lagerelements gemäß einer Ausführungsform;
- Fig. 20 bis 22: Ansichten eines fadenverstärkten Lagerelements gemäß einer weiteren Ausführungsform;
- Fig. 23 bis 25: Ansichten des Grundkörpers des in den Figuren 20 bis 22 gezeigten fadenverstärkten Lagerelements;
- Fig. 26 bis 29: Ansichten eines fadenverstärkten Lagerelements gemäß einer weiteren Ausführungsform;
- Fig. 30 und 31: Ansichten eines fadenverstärkten Lagerelements gemäß einer weiteren Ausführungsform;
- Fig. 32 bis 35: Ansichten eines fadenverstärkten Lagerelements gemäß einer weiteren Ausführungsform;
- Fig. 36 bis 39: Ansichten eines fadenverstärkten Lagerelements gemäß einer weiteren Ausführungsform;
- Fig. 40 bis 43: Ansichten eines fadenverstärkten Lagerelements gemäß einer weiteren Ausführungsform;
- Fig. 44: eine perspektivische Ansicht eines Drehgestells;
- Fig. 45: eine Draufsicht des Drehgestells gemäß Figur 44;
- Fig. 46: ein vergrößerter Ausschnitt der Draufsicht gemäß Figur 44;
- Fig. 47: eine perspektivische Ansicht einer Motor-Getriebe-Einheit mit daran angeordneten Lagerelementen; und
- Fig. 48: eine Draufsicht der Motor-Getriebe-Einheit mit daran angeordneten Lagerelementen.

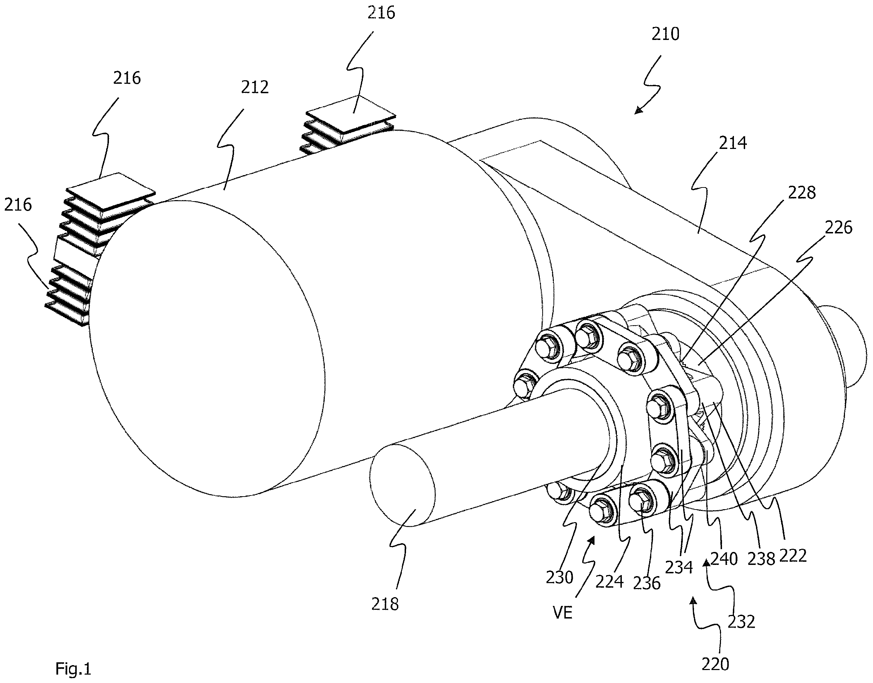

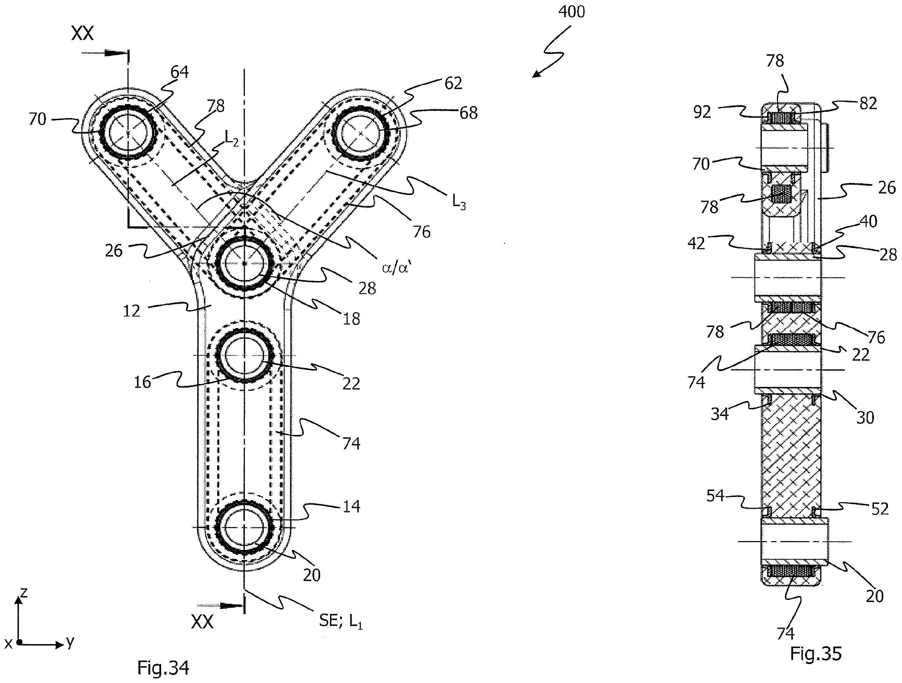

Figur 1 zeigt eine perspektivische Ansicht einer Motor-Getriebe-Einheit 210. Die Motor-Getriebe-Einheit 210 weist einen Motor 212 und ein Getriebe 214 auf. Die Motor-Getriebe-Einheit 210 ist über Federelemente 216 mit einem in Figur 34 nicht gezeigten Drehgestell verbunden. Die Motor-Getriebe-Einheit 210 treibt eine Rad-satzwelle 218 an. Dazu ist das Getriebe 214 der Motor-Getriebe-Einheit 210 über eine Kupplungsvorrichtung 220 mit der Radsatzwelle 218 gekoppelt.

Die Kupplungsvorrichtung 220 weist einen (ersten) Flansch 222 und eine Verbindungseinrichtung VE auf. Die Verbindungseinrichtung VE weist einen (zweiten) Flansch 224 auf. Der Flansch 222 ist über eine Verzahnung 228 mit einer Getriebeausgangswelle 226 des Getriebes 214 gekoppelt. Der Flansch 224 ist mit der Radsatzwelle 218 gekoppelt. Zur Kopplung mit dem Flansch 224 weist die Radsatzwelle 218 einen Vorsprung 230 in Form eines umlaufenden Abschnitts mit größerem Außendurchmesser auf. Der Flansch 224 kann auf den Vorsprung 230 aufgepresst werden.

Der Flansch 222 und der Flansch 224 sind über eine fadenverstärkte Gelenkvorrichtung 232 miteinander verbunden. Die fadenverstärkte Gelenkvorrichtung 232 setzt sich gemäß dieser Ausführungsform aus mehreren Kupplungskörpern 234 zusammen. Die Kupplungskörper 234 weisen jeweils einen elastischen Körper auf, in den ein Fadenpaket (nicht gezeigt) und eine Stützeinrichtung für das Fadenpaket eingebettet sein kann. Die Kupplungskörper 234 werden über Schrauben 236 mit dem Flansch 222 und dem Flansch 224 verschraubt. Jeweils eine Schraube 236 fixiert zwei in axialer Richtung abschnittsweise aneinander anliegende Kupplungskörper 234 an dem entsprechenden Flanscharm 238 oder 240. Die Flansche 222 und 224 weisen Flanscharme 238 und 240 auf. Die Kupplungskörper 234 sind in zwei Ebenen E1 und E2 an den Flanscharmen 238 und 240 angeordnet und über die Schrauben 236 an den Flanscharmen 238 und 240 befestigt. Die Flanscharme 238 des Flansches 222 umgreifen den Flansch 224, um mit der fadenverstärkten Gelenkvorrichtung 232 gekoppelt werden zu können.

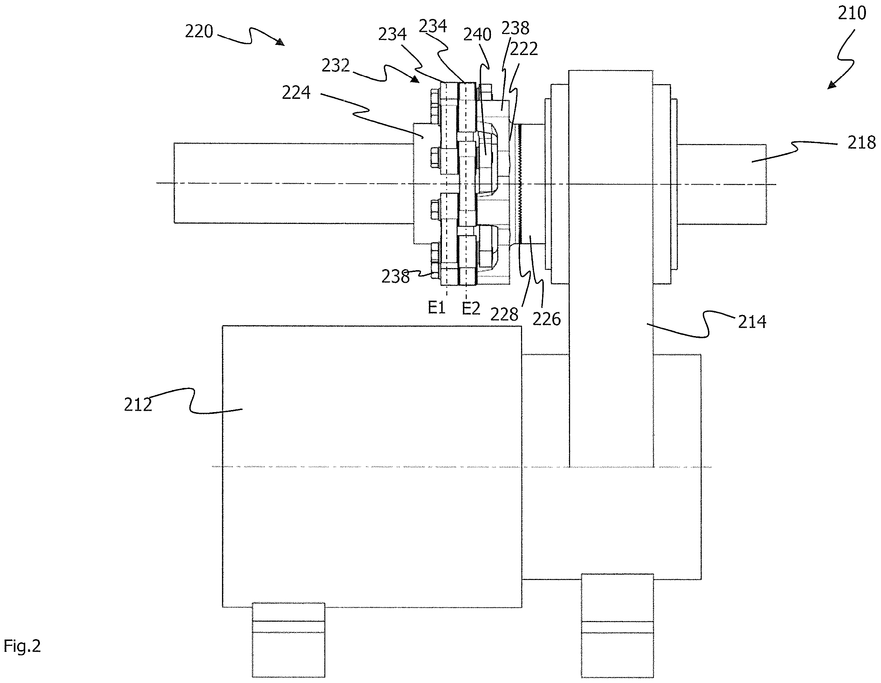

Figur 2 zeigt eine Draufsicht der Motor-Getriebe-Einheit 210 mit der Kupplungsvorrichtung 220. Die Kupplungsvorrichtung 220 weist den (ersten) Flansch 222 und den (zweiten) Flansch 224 auf, die über die fadenverstärkte Gelenkvorrichtung 232 miteinander verbunden sind. Der Flansch 222 weist Flanscharme 238 auf, die sich abgewinkelt in Richtung der fadenverstärkten Gelenkvorrichtung 232 erstrecken. Zwischen zwei benachbarten Flanscharmen 238 des Flansches 222 sind die Flanscharme 240 des Flansches 224 erkennbar, die sich in radialer Richtung erstrecken. Die Flanscharme 238 und 240 sind mit der fadenverstärkten Gelenkvorrichtung über die Schrauben 236 verbunden. Der Flansch 222 ist mit der Getriebeausgangswelle 226 des Getriebes 2214 über eine Verzahnung 228 verbunden.

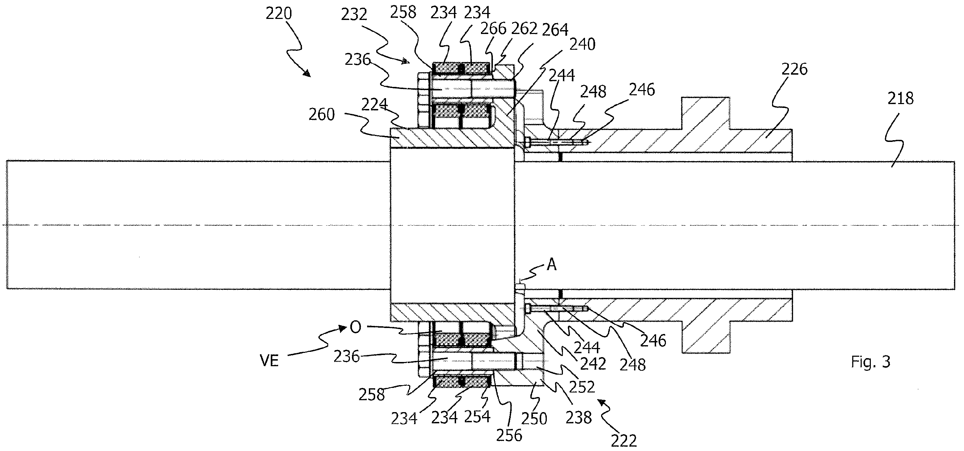

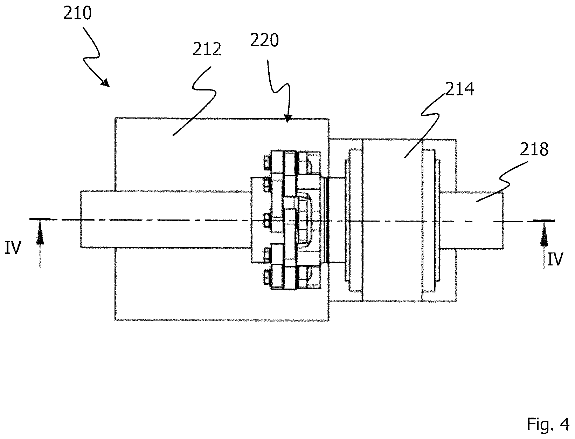

Figur 3 zeigt eine Vorderansicht der Motor-Getriebe-Einheit 210 mit der Kupplungsvorrichtung 220. Figur 4 zeigt eine Schnittansicht entlang der Schnittlinie IV-IV in Figur 3, die den Verlauf der Schnittlinie IV-IV durch die Motor-Getriebe-Einheit 210 zeigt.

Die Kupplungsvorrichtung 220 weist den Flansch 222 und den Flansches 224 auf. Der Flansch 222 weist die Flanscharme 238 und einen Befestigungsabschnitt 242 auf, der ringförmig ausgebildet ist. An der Stirnseite dieses Befestigungsabschnitts 242 ist die in den Figuren 34 und 35 gezeigte Verzahnung 228 ausgebildet. Der Befestigungsabschnitt 242 weist Öffnungen 244 auf, über die der Flansch 222 mit der Getriebeausgangswelle 226 verschraubt werden kann. Dazu weist die Getriebeausgangswelle 226 ebenfalls Öffnungen 246 auf. In die Öffnungen 244 und 246 können die Schrauben 248 eingesetzt werden, um den Flansch 222 und die Getriebeausgangswelle 226 miteinander zu verbinden. Ausgehend von dem Befestigungsabschnitt 242 erstrecken sich die Flanscharme 238 zunächst radial auswärts, bevor sie in einen sich in axialer Richtung erstreckenden Abschnitt 250 übergehen. Ausgehend vom Befestigungsbereich 242 erstrecken sich die Flanscharme 238 somit abgewinkelt in Richtung der fadenverstärkten Gelenkvorrichtung 232. In dem sich in axialer Richtung erstreckenden Abschnitt 250 ist eine Öffnung 252 ausgebildet, die ein Innengewinde aufweist. In das Innengewinde können die Schrauben 236 zur Befestigung der fadenverstärkten Gelenkvorrichtung 232 am Flansch 222 eingeschraubt werden. Die Öffnung 252 ist als Durchgangsöffnung ausgebildet. An dem sich in axialer Richtung erstreckenden Abschnitt 250 sind Befestigungsflächen 254 ausgebildet, an denen sich die fadenverstärkte Gelenkvorrichtung 232 abstützen kann. An den Befestigungsflächen 254 ist eine Ausnehmung 256 ausgebildet, in der eine Buchse 258 der fadenverstärkten Gelenkvorrichtung zumindest abschnittsweise aufgenommen werden kann. Die Buchsen 258 erstrecken sich durch die Kupplungskörper 234 und verbinden jeweils zwei Kupplungskörper 234 miteinander. Die Stirnseite der Buchse 258 kann sich axial an dem Boden der Ausnehmung 256 abstützen.

Die Flanscharme 238 umgreifen den Flansch 224, d.h. die Flanscharme 238 greifen mit ihren axialen Abschnitt 250 zwischen die Flanscharme 240 des Flansches 224 ein, die sich in radialer Richtung erstrecken. Der Flansch 224 weist die Flanscharme 240 und den Befestigungsabschnitt 260 auf. Der Befestigungsabschnitt 260 ist rohrförmig ausgebildet und kann auf den Befestigungsvorsprung 230 der Radsatzwelle 218 aufgepresst werden. Die axiale Erstreckung des rohrförmigen Befestigungsabschnitts 260 entspricht der axialen Erstreckung des Befestigungsvorsprungs 230. Der rohrförmige Befestigungsabschnitt 260 erstreckt sich durch die zentrale Öffnung O der fadenverstärkten Gelenkvorrichtung 232. Ausgehend von dem rohrförmigen Befestigungsabschnitt 260 erstrecken sich die Flanscharme 240 radial auswärts. An den Flanscharmen 240 sind Befestigungsflächen 262 ausgebildet, die jeweils eine Öffnung 264 aufweisen. Die Öffnung 264 kann ein Innengewinde aufweisen. Zur Herstellung einer Verbindung zwischen der fadenverstärkten Gelenkvorrichtung 232 und dem Flansch 224 kann eine Schraube 236 mit dem Innengewinde in der Öffnung 264 verschraubt werden. Im Bereich der Öffnung 264 weist die Befestigungsfläche 262 einen Vorsprung 266 auf. An dem Vorsprung 266 ist eine Ausnehmung ausgebildet, in der eine Buchse 258 zumindest abschnittsweise aufgenommen sein kann. Die Stirnseite der Buchse 258 kann sich am Boden der Ausnehmung abstützen.

Der Befestigungsabschnitt 260 des Flansches 224 und der Befestigungsabschnitt 242 des Flansches 222 sind in axialer Richtung zueinander versetzt angeordnet. Dadurch stellt sich ein vorbestimmter axialer Abstand A zwischen dem Befestigungsabschnitt 242 des Flansches 222 und dem Flansch 224 ein. Durch die abgewinkelte Ausbildung der Flanscharme 238 des Flansches 222 mit ihren sich in axialer Richtung erstreckenden Abschnitten 250 liegen die Befestigungsflächen 254 des Flansches 222 und die Befestigungsflächen 262 des Flansches 224 im Ruhezustand der Kupplungsvorrichtung 220 in einer Ebene. Der Flansch 222 kann den Flansch 224 somit umgreifen bzw. überspannen. Die Flanscharme 238 und 240 der Flansche 222 und 224 sind an der-selben axialen Seite der fadenverstärkten Gelenkvorrichtung 232 angeordnet. Die in einer Ebene liegenden Befestigungsflächen 254 und 262 der Flanscharme 238 und 240 sind dementsprechend an derselben axialen Seite der fadenverstärkten Gelenkvorrichtung 232 zugewandt. Die fadenverstärkte Gelenkvorrichtung 232 wird über eine von den Schrauben 236 mit ihren Schraubenköpfen ausgeübten Klemmkraft an den Befestigungsflächen 254 und 262 der Flansche 222 und 224 gehalten.

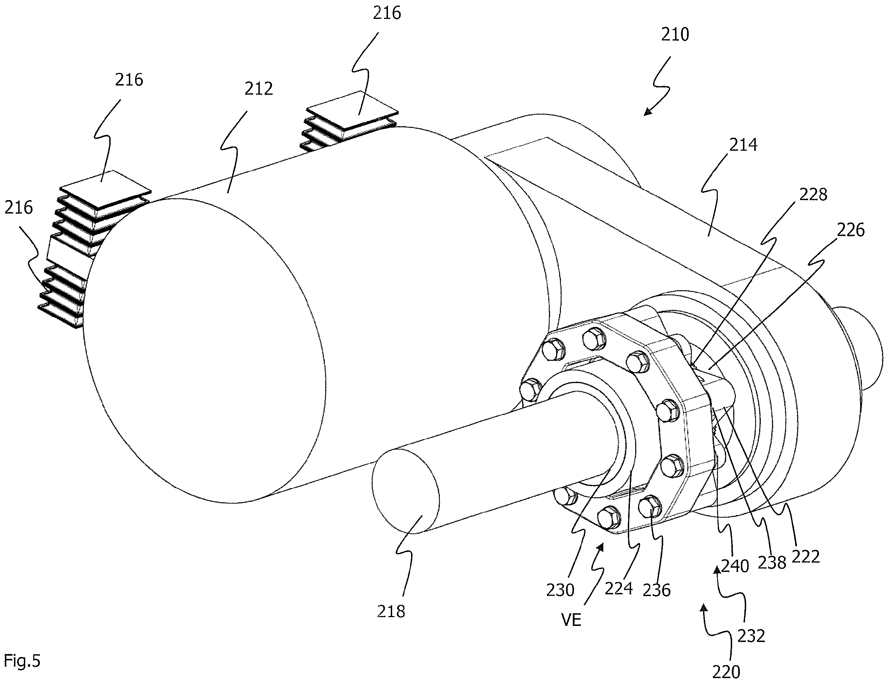

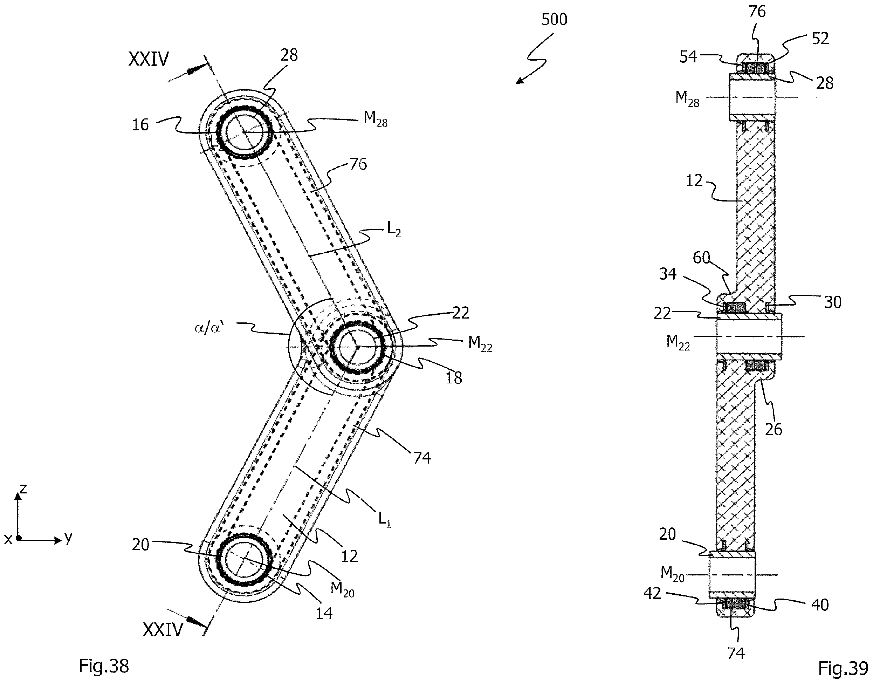

Die Figuren 4 und 5 zeigen eine Variante der Kupplungsvorrichtung 220 gemäß der ersten Ausführungsform. Anstelle einer fadenverstärkten Gelenkvorrichtung 232, die sich aus mehreren Kupplungskörpern (Kupplungslaschen) 234 zusammensetzt, ist bei der Kupplungsvorrichtung 220 gemäß der Figuren 38 und 39 eine fadenverstärkte Gelenkvorrichtung 232 in Form eines Laschenrings (Gelenkscheibe) vorgesehen. Der Laschenring ist einstückig ausgebildet und wird über die Schrauben 236 mit den Flanschen 222 und 224 verschraubt.

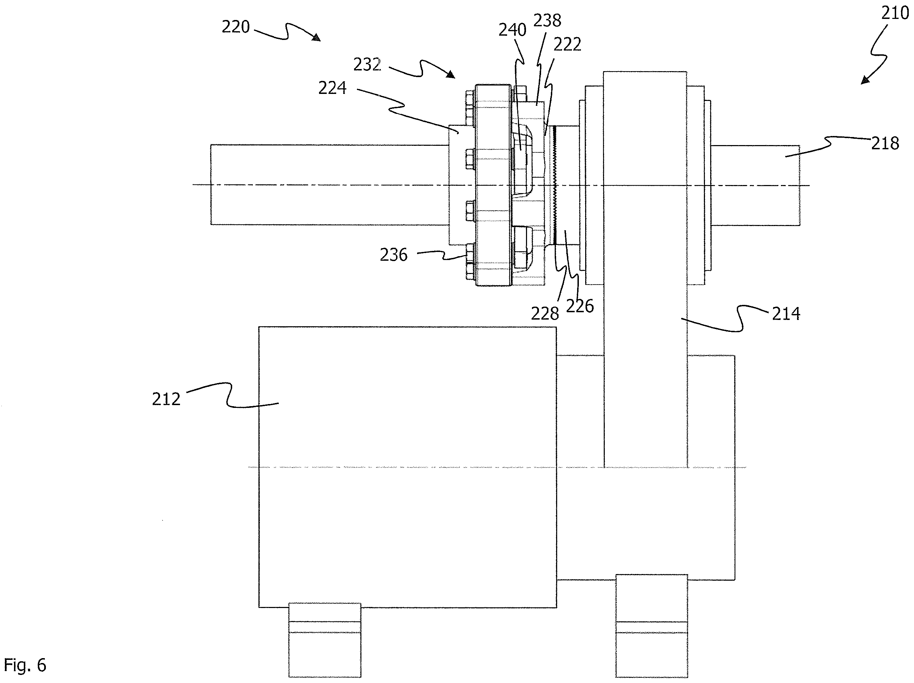

Figur 6 zeigt eine perspektivische Ansicht einer Kupplungsvorrichtung 2120 gemäß einer zweiten Ausführungsform der Erfindung. Die Kupplungsvorrichtung 2120 weist einen (ersten) Flansch 222 und einen (zweiten) Flansch 224 auf. Der Flansch 222 weist einen Befestigungsabschnitt 242 und Flanscharme 238 auf. An der Stirnseite des Befestigungsabschnitts 242 ist die Verzahnung 228 ausgebildet. Die Flanscharme 238 weisen eine (erste) Befestigungsfläche 254 und eine (zweite) Befestigungsfläche 268 auf, die an den axialen Seiten der Flanscharme 238 ausgebildet sind. Der Flansch 224 weist einen Befestigungsabschnitt 260 und die Flanscharme 240 auf. Die Flanscharme 240 weisen eine (erste) Befestigungsfläche 262 und eine (zweite) Befestigungsfläche 270 auf, die an den entgegengesetzten axialen Seiten der Flanscharme 240 ausgebildet sind. Die Flanscharme 238 und 240 gemäß dieser Ausführungsform greifen ineinander ein. Die fadenverstärkte Gelenkvorrichtung 232 ist an den Befestigungsflächen 254, 268 und 262, 270 der Flanscharme 238 und 240 vorgesehen. Die fadenverstärkte Gelenkvor-richtung 232 weist neben den Gelenckörpern 234 auch Gelenkkörper 272 auf, die über die Schrauben 274 mit den Befestigungsflächen 268 und 270 der Flanscharme 238 und 240 verschraubt werden. Die Kupplungskörper 234 werden über die Schrauben 236 mit den Befestigungsflächen 254 und 262 der Flanscharme verschraubt.

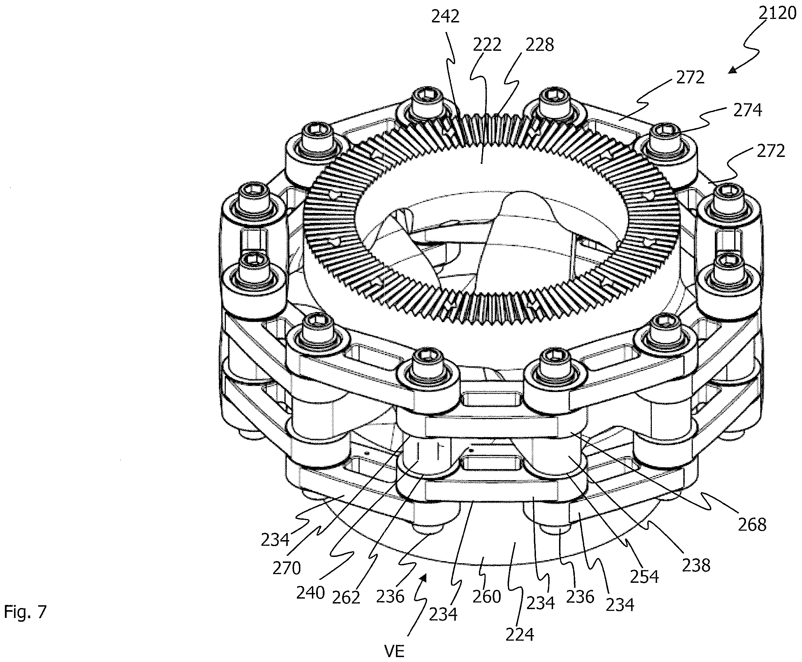

Figur 7 zeigt eine Draufsicht der Kupplungsvorrichtung 2120. In Figur 7 ist der Flansch 222 gezeigt, der einen Befestigungsabschnitt 242 aufweist. Die Stirnseite des Befestigungsabschnitts 242 ist mit einer Verzahnung 228 versehen. Die Flanscharme 238 des Flansches 222 sind über die Schrauben 274 mit den Kupplungskörpern 272 verschraubt.

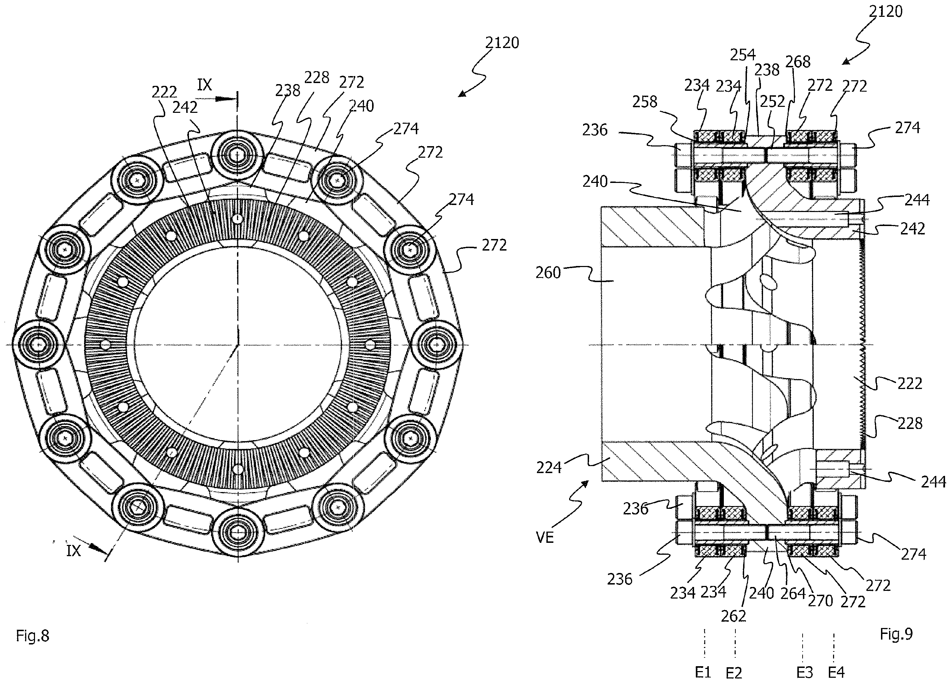

Figur 8 zeigt eine Schnittansicht entlang der Schnittlinie IX-IX in Figur 7. In Figur 8 wird deutlich, wie die Flanscharme 238 und 240 der Flansche 222 und 224 ineinander eingreifen. Die Flanscharme 238 und 240 greifen derart ineinander ein, dass sie in einer Ebene liegen. An den axialen Seiten der Flanscharme 238 und 240 ist die fadenverstärkte Gelenkvorrichtung 232 mit ihren Kupplungskörpern 234 und 272 angeordnet. Die Flanscharme 238 weisen eine Durchgangsöffnung 252 mit einem Innengewinde auf. In die Öffnung 252 werden die Schrauben 236 und 274 eingeschraubt, um die Kupplungskörper 272 und 234 an dem Flanscharm 238 befestigen zu können. Die Öffnung 252 nimmt somit die beiden Schrauben 236 und 274 abschnittsweise auf. Die Befestigungsflächen 254 und 268 der Flanscharme 238 sind mit einer Ausnehmung versehen, in denen eine Buchse 258 der fadenverstärkten Gelenkvorrichtung 232 abschnittsweise aufgenommen werden kann. Die Buchse 258 kann sich mit ihrer Stirnseite axial an den Befestigungsflächen 254 und 268 abstützen.

Die Flanscharme sind im Wesentlichen identisch zu den Flanscharmen 238 ausgebildet. Die Flanscharme 240 weisen ebenfalls eine Durchgangsöffnung 264 mit einem Innengewinde auf. In die Öffnung 264 werden die Schrauben 270 und 236 eingeschraubt, um die Kupplungskörper 234 und 272 über eine Klemmkraft an den Befestigungsflächen 262 und 270 halten zu können. Jeweils zwei Kupplungskörper 234 und 272 werden über die entsprechende Schraube 236 oder 274 an dem Flanscharm 238, 240 gehalten.

Die Kupplungskörper 234 sind in zwei Ebenen E1 und E2 an den Flanscharmen 238 und 240 angeordnet und über die Schrauben 236 an den Befestigungsflächen 254 und 262 der Flanscharmen 238 und 240 befestigt. Die Kupplungskörper 272 sind in zwei Ebenen E3 und E4 an den Befestigungsflächen 268 und 272 der Flanscharme 238 und 40 angeordnet und über die Schrauben 274 an den Flanscharmen 238 und 240 befestigt. Die Flanscharme 238 und 240 erstrecken sich in axialer Richtung zwischen den Ebenen E1, E2 und E3, E4.

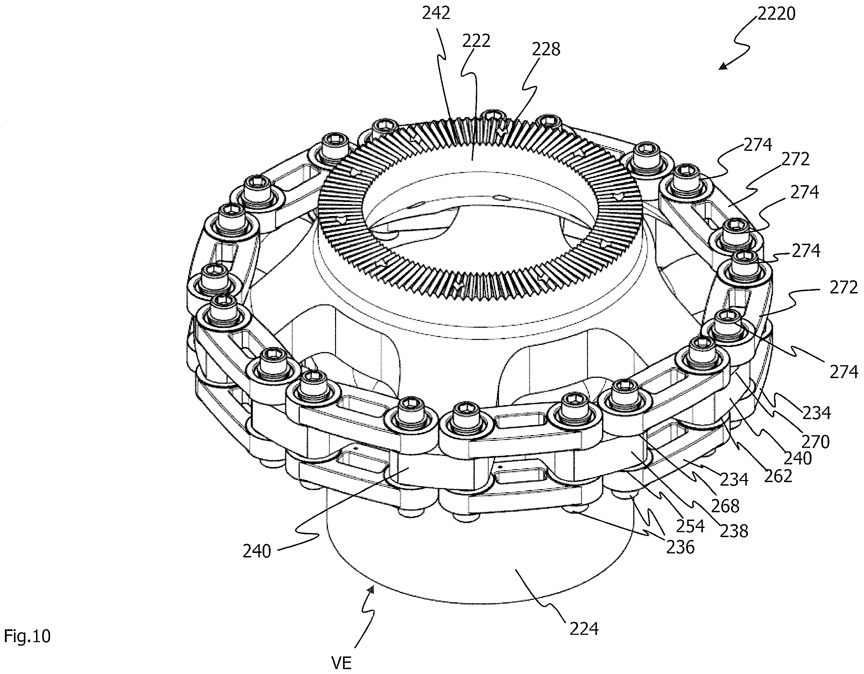

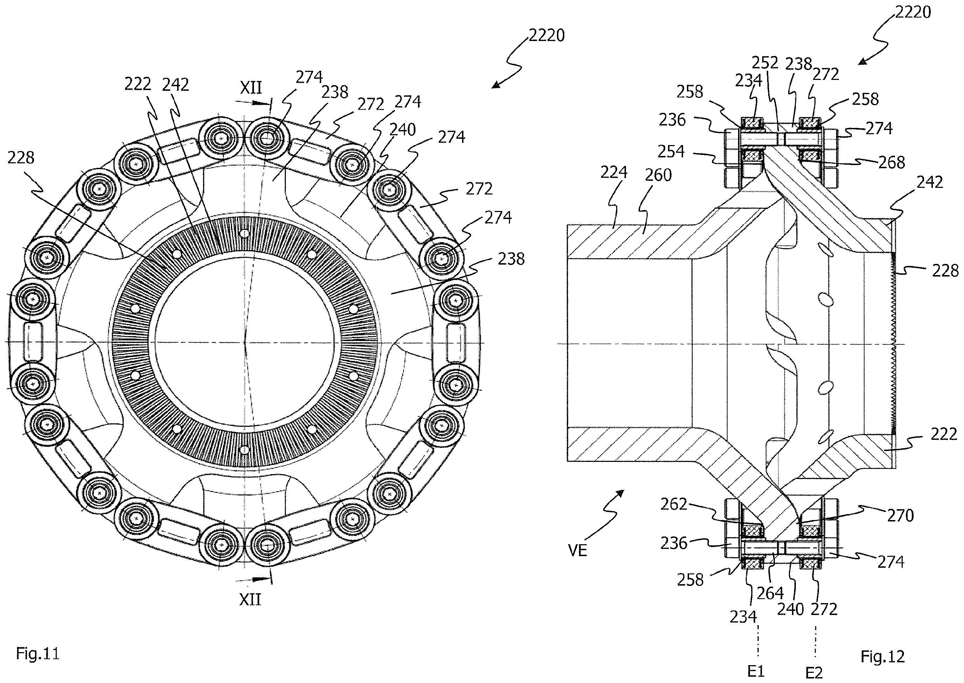

Die Figuren 9 bis 12 zeigen Ansichten einer Kupplungsvorrichtung 2220 gemäß einer dritten Ausführungsform, die der zweiten Ausführungsform relativ ähnlich ist. Die Kupplungsvorrichtung 2220 weist einen (ersten) Flansch 222 und einen (zweiten) Flansch 224 auf, die wiederum Flanscharme 238, 240 aufweisen. Jeder Flanscharm 238, 240 ist über einen Kupplungskörper 234, 272 mit dem benachbarten Flanscharm 238, 240 verbunden. Jeder Kupplungskörper 234 ist über die Schrauben 236 mit benachbarten Flanscharmen 238 und 240 verschraubt und liegt an den benachbarten Flanscharmen 238, 240 an. Gleiches gilt für die Kupplungskör-per 272 und die Schrauben 274. Die Kupplungskörper 234 und die Kupplungskörper 272 sind jeweils in einer in einer Ebene E1, E2 und in Umfangsrichtung zueinander versetzt an den Flanscharmen 238, 240 angeordnet. Anders ausgedrückt weist die fadenverstärkte Gelenkvorrichtung 232 an einer axialen Seite der Flanscharme 238, 240 eine Ebene E1 mit Kupplungskörpern 234 und an der entgegengesetzten axialen Seite der Flanscharme 238 und 240 eine Ebene E2 mit Kupplungskörpern 272 auf. Jeder Flanscharm 238, 240 ist über jeweils eine Schraube 236, 274 mit in Umfangsrichtung zueinander versetzt angeordneten Kupplungskörpern 234, 272 verbunden. Jeder Flanscharm 238 und 240 weist somit zwei Öffnungen 252 und 264 auf, in die die Schrauben 236 und 274 in axialer Richtung aufeinander zu eingeschraubt werden können, d.h. die Schrauben 236 und 274 werden an entgegengesetzten axialen Seiten der Flanscharme 238, 240 in die Flanscharme 238, 240 eingeschraubt.

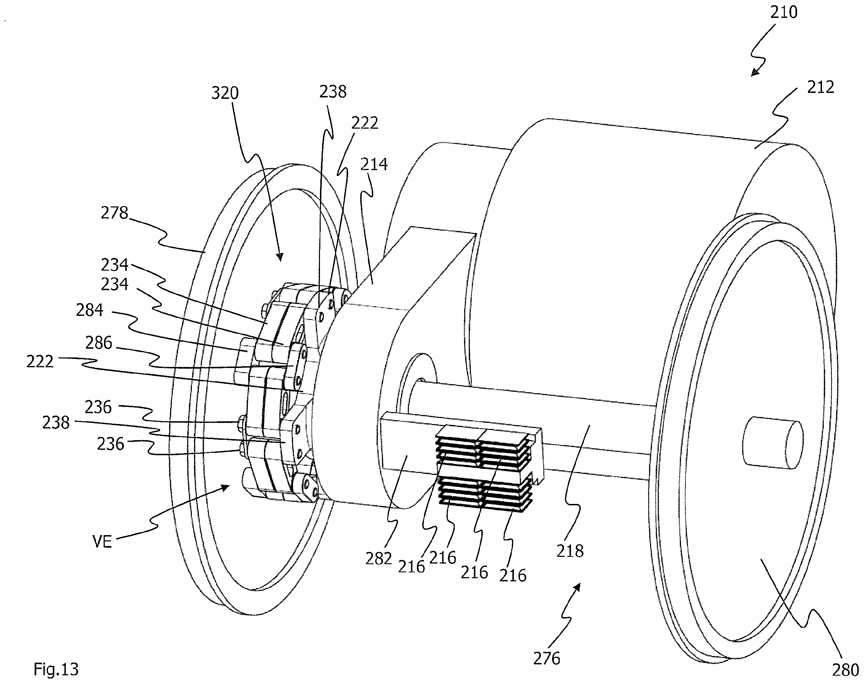

Fig. 13 zeigt eine perspektivische Ansicht einer Motor-Getriebe-Einheit 210 und eines Radsatzes 276. Die Motor-Getriebe-Einheit 210 weist einen Motor 212 und ein Getriebe 214 auf. Der Radsatz 276 weist eine Radsatzwelle 218 und zwei Räder 278 und 280 auf. Die Motor-Getriebe-Einheit 210 ist über Federelemente 216 mit einem Drehgestell (nicht gezeigt) verbunden. Die Federelemente 216 sind an einem Lagerabschnitt 282 angebracht, der mit dem Getriebe 214 verbunden ist. Die Federelemente 216 sind in Richtung der Radsatzwelle 218 in einem mittleren bzw. zentralen Bereich der Motor-Getriebe-Einheit 210 angeordnet.

Die Motor-Getriebe-Einheit 210 ist über eine Kupplungsvorrichtung 320 gemäß einer vierten Ausführungsform mit dem Radsatz 276 gekoppelt. Die Motor-Getriebe-Einheit 210 treibt über die Kupplungsvorrichtung 320 das Rad 278 des Radsatzes 276 an. Die Kupplungsvorrichtung 320 weist einen Flansch 222 und eine Verbindungseinrichtung VE auf, die mehrere Verbindungselemente 284 umfasst. Die Verbindungselemente 284 verbinden die fadenverstärkte Gelenkvorrichtung 232 mit dem Rad 278. Die Verbindungselemente 284 legen sich dazu an das Rad 278 und die fadenverstärkte Gelenkvorrichtung 232 an. Die Verbindungseinrichtung VE weist ferner Gegenanlageelemente 286 auf, die sich an die den Verbindungselementen 284 entgegengesetzte Seite der Kupplungskörper 234 der fadenverstärkten Gelenkvor-richtung 232 anlegen. Die Kupplungskörper 234 der fadenverstärkten Gelenkvorrichtung 232 und die Verbindungseinrichtung VE sind mit dem Rad 278 verschraubt.

Das Getriebe 214 treibt über den Flansch 222 die fadenverstärkte Gelenkvorrichtung 232 an. Die fadenverstärkte Gelenkvorrichtung 232 überträgt das Antriebsmoment über die Verbindungselemente 284 unmittelbar auf das Rad 278 des Radsatzes 276. Über die Radsatzwelle 218 wird das Antriebsmoment auch auf das Rad 280 übertragen.

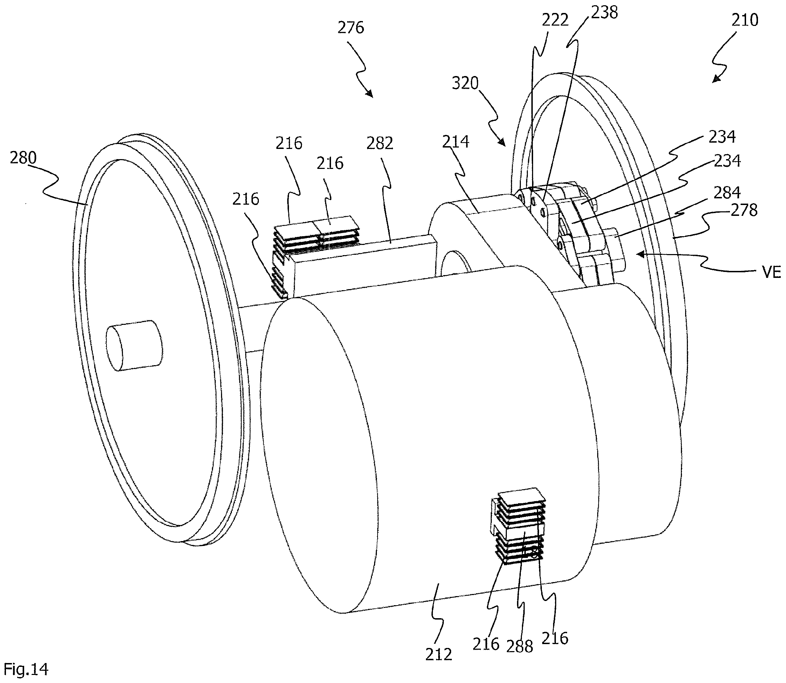

Figur 14 zeigt eine weitere perspektivische Ansicht der Motor-Getriebe-Einheit 210 und des Radsatzes 276. An dem Motor 212 sind ebenfalls Federelemente 216 an einem Lagerabschnitt 288 vorgesehen. Die Federelemente 216 dienen zur Lagerung der Motor-Getriebe-Einheit 210 an einem Drehgestell (nicht gezeigt).

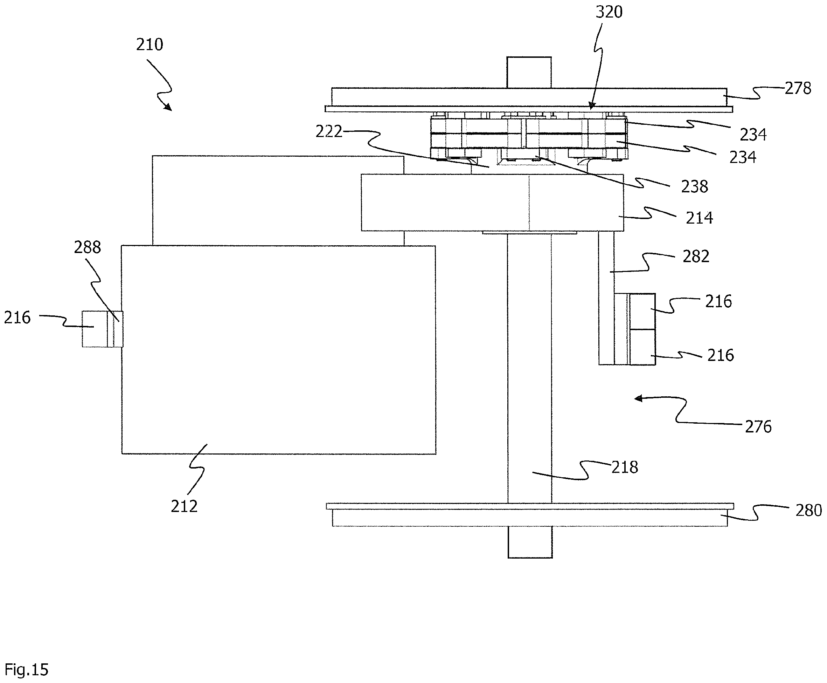

Figur 15 zeigt eine Draufsicht der Motor-Getriebe-Einheit 210 und des Radsatzes 276. Das Getriebe 214 der Motor-Getriebe-Einheit 210 ist über die Kupplungsvorrichtung 320 mit dem Radsatz 276 verbunden. Die Kupplungsvorrichtung 320 ist mit dem Rad 278 des Radsatzes 276 verschraubt. Das Getriebe 214 ist über einen Flansch 222 mit der Kupplungsvorrichtung 320 gekoppelt, sodass ein Antriebsmoment von dem Getriebe 214 über die Kupplungsvorrichtung 320 auf das Rad 276 übertragen werden kann.

In Figur 15 sind ferner die Federelemente 216 gezeigt, die zur Lagerung der Motor-Getriebe-Einheit 210 an einem Drehgestell (nicht gezeigt) dienen. Die Federelemente 216 sind in Richtung der Radsatzwelle 218 in einem mittleren bzw. zentralen Bereich Motor-Getriebe-Einheit 210 angeordnet.

Die voranstehend beschriebenen Ausführungsformen der Kupplungsvorrichtung 220, 2120, 2220, 320 weisen eine vorbestimmte radiale Steifigkeit auf. Die Kupplungsvorrichtung 220, 2120, 2220, 320 kann somit in radialer Richtung wirkende Kräfte aufnehmen. Neben den in radialer Richtung wirkenden Kräften kann die Kupplungsvorrichtung 220, 2120, 220, 320 auch aus einem Antriebsmoment des Fahrzeugs resultierende Kräfte, Axialkräfte und Beugemomente aufnehmen. Die voranstehend beschriebenen Ausführungsformen der Kupplungsvorrichtung 220, 2120, 2220, 320 können Relativbewegungen zwischen der Motor-Getriebe-Einheit 210 und einem Radsatz eines Fahrzeugs ausgleichen. Der Ausgleich von Relativbewegungen findet ausschließlich unter einer elastischen Deformation der fadenver-stärkten Gelenkvorrichtung 232 statt.

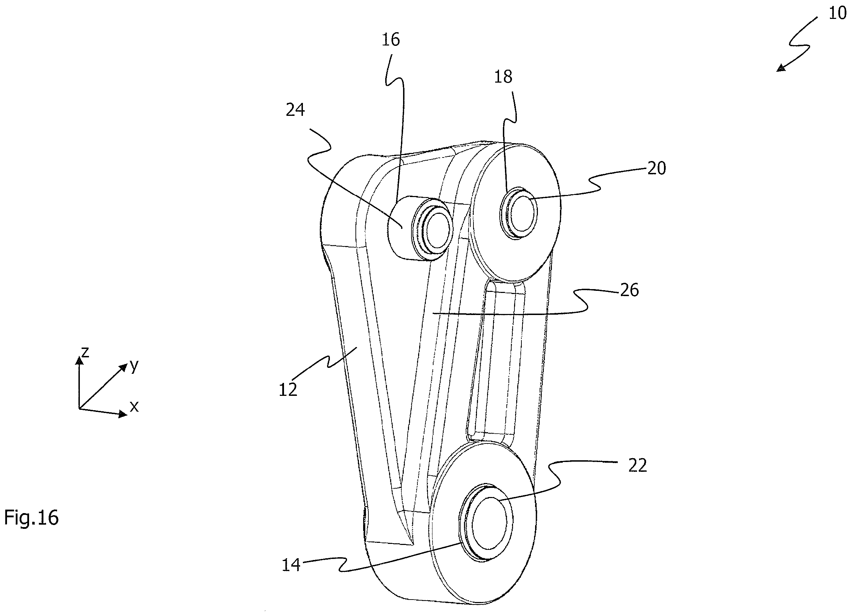

Figur 16 zeigt eine perspektivische Ansicht eines fadenverstärkten Lagerelements gemäß einer ersten Ausführungsform, das allgemein mit 10 bezeichnet ist. Das fadenverstärkte Lagerelement 10 kann zur Lagerung einer Motor-Getriebe-Einheit (in Figur 16 nicht gezeigt) an einem Drehgestell (nicht gezeigt) dienen.

Das Lagerelement 10 weist einen elastischen Körper 12 auf, in dem drei Befestigungsöffnungen 14, 16 und 18 ausgebildet sind. In den Befestigungsöffnungen 14 und 18 sind Buchsen 20 und 22 aufgenommen. Die in der Befestigungsöffnung 16 aufgenommene Buchse ist in Figur 16 nicht gezeigt bzw. nicht erkennbar, dass sie von einem Distanzstück 24 verdeckt wird. Das Distanzstück 24 erstreckt sich von dem elastischen Körper 12 weg. Die in Figur 16 gezeigte Stirnseite des Distanzstücks 24 liegt in einer Ebene mit den Stirnseiten der Buchsen 20 und 22.

Zwischen den Befestigungsöffnungen 14, 16, 18 erstrecken sich in Figur 16 nicht gezeigte Fadenpakete. Die Fadenpakete umschlingen die Buchsen 20, 22 und auch die in der Befestigungsöffnung 16 angeordnete Buchse (nicht gezeigt). Die Buchse 22 wird von zwei Fadenpaketen umschlungen, die sich ausgehend von der Buchse 22 in dem elastischen Körper 12 in Richtung der Befestigungsöffnungen 16, 18 erstrecken. Ein Fadenpaket umschlingt die Buchse 20 in der Befestigungsöffnung 18 und das andere Fadenpaket umschlingt die in Figur 16 nicht gezeigte Buchse in der Befestigungsöffnung 16. Da sich die Fadenpakete ausgehend von der Buchse 22 in axialer Richtung der Buchsen 20, 22 versetzt in Richtung der Befestigungsöffnungen 14, 16 erstrecken, weist der elastische Körper 12 eine Stufe 26 auf. Anders ausgedrückt wird die Stufe 26 in dem elastischen Körper 12 durch den axialen Versatz der beiden nicht gezeigten Fadenpakete des Lagerelements 10 gebildet. Aufgrund der Stufe 26 ist das Distanzstück 24 vorgesehen. Die Stirnseiten der Buchsen 20, 22 und des Distanzstücks 24 liegen in einer Ebene. Dadurch wird eine gemeinsame Befestigungsebene der Buchsen 20, 22 und des Distanzstücks 24 gebildet, so dass sich die Buchsen 20, 22 und das Distanzstück 24 in einer gemeinsamen Befestigungsebene an die über das Lagerelement zu verbindenden Einheiten beispielsweise eines Schienenfahrzeugantriebs anlegen können.

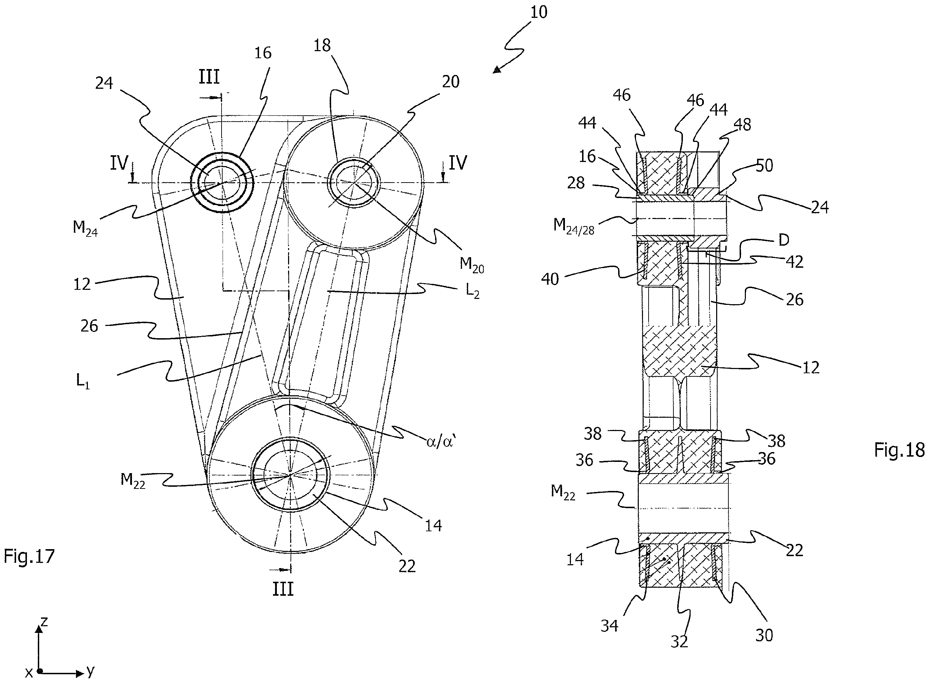

Figur 17 zeigt eine Draufsicht des Lagerelements 10. Das Lagerelement 10 bzw. der elastische Körper 12 des Lagerelements 10 ist im Wesentlichen in Form eines Dreiecks ausgebildet. Die Buchse 20 und das Distanzstück 24 bzw. die Befestigungsöffnungen 16, 18 sind um die Mittelachse M₂₂ der Buchse 22 um einen vorbestimmten Winkel α zueinander versetzt in dem elastischen Körper 12 angeordnet. Der Winkel α wird zwischen zwei gedachten Linien L₁ und L₂ abgetragen. Die Linie L₁ erstreckt sich zwischen der Mittelachse M₂₂ der Buchse 22 und der Mittelachse M₂₄ des Distanzstücks 24. Die Linie L₂ erstreckt sich zwischen der Mittelachse M₂₂ der Buchse 22 und der Mittelachse M₂₀ der Buchse 20. Die Befestigungsöffnungen 14 und 16 sind über ein in Figur 17 nicht gezeigtes Fadenpaket miteinander verbunden, das die Buchse 22 in der Befestigungsöffnung 14 und die Buchse (nicht gezeigt) in der Befestigungsöffnung 16 umschlingt. Die Befestigungsöffnungen 14 und 18 sind ebenfalls über ein in Figur 17 nicht gezeigtes Fadenpaket miteinander verbunden, das die Buchsen 20 und 22 umschlingt.

Das fadenverstärkte Lagerelement 10 ist derart ausgebildet, dass es in x-Richtung, y-Richtung und in z-Richtung unterschiedliche Steifigkeiten bereitstellen kann. Durch die unterschiedlichen Steifigkeiten kann festgelegt werden, wie in welcher Richtung in welchem Umfang Relativbewegungen der einer Motor-Getriebe-Einheit (nicht gezeigt) und/oder eines Radsatzes (nicht gezeigt) von dem Lagerelement 10 relativ zu dem Drehgestell zugelassen und ausglichen werden können. In z-Richtung kann das fadenverstärkte Lagerelement 10 beispielsweise eine hohe Steifigkeit aufweisen, da die beiden Fadenpakete in z-Richtung auf Zug belastet werden. In γ-Richtung kann das fadenverstärkte Lagerelement 10 beispielsweise weniger steif als in z-Richtung sein, da die beiden Fadenpakete in γ-Richtung nur geringfügig auf Zug belastet werden. In x-Richtung kann das fadenverstärkte Lagerelement 10 eine relativ geringe Steifigkeit aufweisen, um relativ große Auslenkungen des Radsatzes und/oder der Motor-Getriebe-Einheit relativ zu dem Drehgestell in x-Richtung zulassen bzw. aufnehmen zu können.

Die x-Richtung kann der Längsrichtung bzw. der Fahrtrichtung eines Schienenfahrzeugs (nicht gezeigt) entsprechen. Die γ-Richtung kann der Querrichtung des Schienenfahrzeugs und die z-Richtung kann der Hochachse des Schienenfahrzeugs entsprechen.

Die in Figur 17 nicht gezeigten Fadenpakete des fadenverstärkten Lagerelements 10 erstrecken sich somit mit eine vorbestimmten Winkel α zwischen den Befestigungsöffnungen 14, 16 und 18 in dem elastischen Körper 12 bzw. zwischen den Buchsen 20, 22 und der von dem Distanzstück 24 verdeckten Buchse in der Befestigungsöffnung 16. Dies wird insbesondere durch die Stufe 26 erkennbar, die den Versatz der Fadenpakete in axialer Richtung der Buchsen 20, 22 sowie den Winkelversatz (Winkel α') zwischen den über die Fadenpakete verbundenen Befestigungsöffnungen 14, 16 und 18 anzeigt. Die Fadenpakete (nicht gezeigt) überlappen sich insbesondere in dem Bereich, in dem sie die Buchse 22 umschlingen. Die Fadenpakete erstrecken sich mit dem Winkel α in Richtung der Befestigungsöffnungen 16 und 18. Über den vorbestimmten Winkel α zwischen den beiden Fadenpaketen kann die Steifigkeit des fadenverstärkten Lagerelements 10 in x-Richtung, γ-Richtung und z-Richtung eingestellt werden. Zumindest die Steifigkeit in x-Richtung und γ-Richtung kann über den Winkel α zwischen den Fadenpaketen eingestellt werden. Der Winkel α kann dem Winkel α' entsprechen.

Figur 18 zeigt eine Schnittansicht entlang der Schnittlinie III-III in Figur 17. In den elastischen Körper 12 sind die Buchsen 22 und 28 in den Befestigungsöffnungen 14 und 16 zumindest abschnittsweise eingebettet. An der Buchse 22 sind Bundelemente 30, 32 und 34 vorgesehen. Die Bundelemente 30 und 34 sind an den axialen Enden der Buchse 22 angeordnet und auf die Buchse 22 aufgepresst. Die Bundelemente 30 und 34 weisen einen sich in axialer Richtung erstreckenden rohrförmigen Abschnitt 36 und einen sich in radialer Richtung erstreckenden Abschnitt 38 auf. Die Bundelemente 30 und 32 sind im Querschnitt als L-förmige Kragen ausgebildet. Die rohrförmigen Abschnitte 36 weisen jeweils in Richtung der axialen Enden der Buchse 22. Zwischen den separaten Bundelementen 30 und 34 ist an der Buchse 22 das Bundelement 32 vorgesehen, das integral mit der Buchse 22 ausgebildet ist. Das Bundelement 32 erstreckt sich von der Außenumfangsfläche der Buchse 22 in radialer Richtung.

Zwischen den Bundelementen 30, 32 und 34 sind in Figur 18 nicht gezeigte Fadenpakete ausgebildet, die von den Bundelementen 30, 32 und 34 an der Buchse 22 geführt und axial abgestützt werden. Die Fadenpakete umschlingen die Außenumfangsfläche der Buchse 22 zumindest abschnittsweise. Die Fadenpakete zwischen den Bundelementen 30, 32 und 32, 34 sind in axialer Richtung der Buchse 22 zueinander versetzt angeordnet und erstrecken sich mit diesem axialen Versatz durch den elastischen Körper 12 jeweils in Richtung der Buchse 20 (siehe Figur 17) und der Buchse 28. Dieser axiale Versatz zwischen den Fadenpaketen wird durch die Stufe 26 in dem elastischen Körper 12 angezeigt, die in den Figuren 2 und 3 erkennbar ist. Das zwischen den Bundelementen 32 und 34 geführte Fadenpaket erstreckt sich in dem elastischen Körper 12 in Richtung der Buchse 28, an der das Distanzstück 24 angeordnet ist. An der Buchse 28 sind ferner zwei Bundelemente 40 und 42 angeordnet, die in Form von L-förmigen Kragen ausgebildet sind. Die Bundelemente 40 und 42 weisen ebenfalls einen axialen, rohrförmigen Abschnitt 44 und einen sich in radialer Richtung erstreckenden Abschnitt 46 auf. Die Bundelemente 40 und 42 sind an den axialen Endabschnitten der Buchse 28 vorgesehen.

Das Distanzstück 24 ist mit einer umlaufenden Ausnehmung 48 versehen, in der ein axialer Endabschnitt der Buchse 28 aufgenommen ist. Eine Stirnfläche der Buchse 28 legt sich an eine axiale Fläche der Ausnehmung 48 an. Die Buchse 28 und das Distanzstück 24 sind koaxial angeordnet, so dass die Öffnungen in der Buchse 28 und dem Distanzstück 24 eine durchgängige Öffnung bilden. Die koaxiale Anordnung der Buchse 28 und des Distanzstücks 24 wird durch die gemeinsame Mittelachse M_{24/28} verdeutlicht. An dem der Ausnehmung 48 entgegengesetzten Endabschnitt 50 des Distanzstücks 24 weist das Distanzstück 24 einen verringerten Außendurchmesser auf. Das Distanzstück 24 ist dazu vorgesehen, eine Distanz D zwischen der Stirnfläche beispielsweise der Buchse 22 und der Stirnfläche der Buchse 28 zu überbrücken, um eine gemeinsame Befestigungsebene aller Buchsen 20 (siehe Figur 17), 22 und 28 einzurichten. Die Distanz D resultiert aus dem axialen Versatz zwischen den Fadenpaketen. Dieser axiale Versatz wird auch durch die Stufe 26 an dem elastischen Körper 12 angezeigt. Die Stirnfläche des Distanzstücks 24 liegt mit den Stirnflächen der Buchsen 20 und 22 in einer Ebene. Auf diese Weise soll die Befestigung des Lagerelements 10 an den über das Lagerelement 10 zu lagernden Einheiten vereinfacht werden.

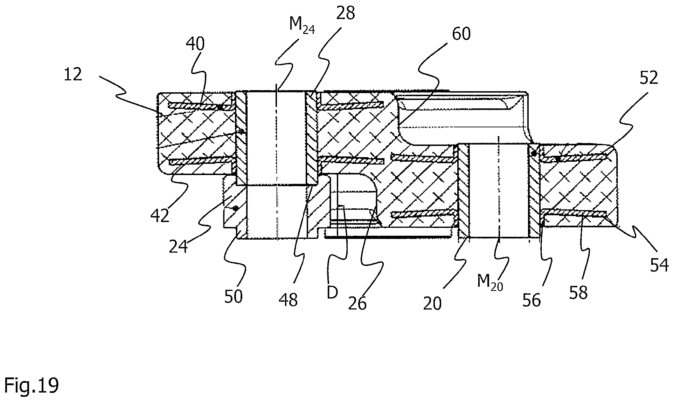

Figur 19 zeigt eine Schnittansicht entlang der Schnittlinie IV-IV in Figur 18. In Figur 4 sind die Buchsen 20 und 28 gezeigt. An der Buchse 28 ist das Distanzstück 24 angeordnet, über das ein Abstand in axialer Richtung der Buchsen zwischen der Stirnfläche der Buchse 20 und der Stirnfläche der Buchse 28 überbrückt werden soll, so dass die Stirnflächen des Distanzstücks 24 und der Buchse 20 in einer Ebene liegen. Die Buchsen 20 und 28 und damit auch die die Buchsen 20 und 28 umschlingenden Fadenpakete sind in axialer Richtung zueinander versetzt. Dieser axiale Versatz resultiert aus dem axialen Versatz, der den Fadenpaketen beim Umschlingen der Buchse 22 durch die Bundelemente 30, 32 und 34 vorgegeben wird. Neben der Stufe 26 weist der elastische Körper 12 an seiner der Endseite mit der Stufe 26 entgegengesetzten axialen Endseite ebenfalls eine Stufe 60 auf.

An der Buchse 20 sind Bundelemente 52 und 54 angeordnet, die sich an den axialen Endabschnitten der Buchse 20 befinden. Die Bundelemente 52 und 54 weisen einen sich in axialer Richtung erstreckenden Abschnitt 56 und einen sich in radialer Richtung erstreckenden Abschnitt 58 auf. Die Bundelemente 52 und 54 sind somit wie die Bundelemente 30, 34, 40 und 42 als im Querschnitt L-förmigen Kragen ausgebildet. Die Bundelemente 40, 42 an der Buchse 28 dienen zur Führung eines der Fadenpakete des Lagerelements 10. Die Bundelemente 52 und 54 an der Buchse 20 dienen zur Führung des jeweils anderen Fadenpakets (nicht gezeigt) des Lagerelements 10.

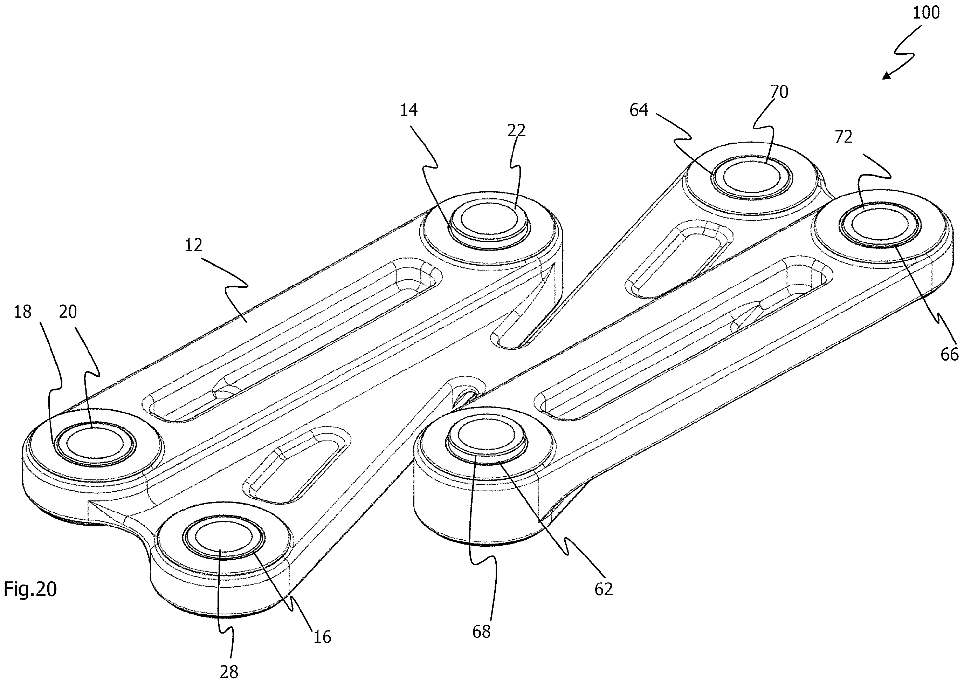

Figur 20 zeigt eine perspektivische Ansicht eines elastischen Gelenkskörpers 100 gemäß einer zweiten Ausführungsform. Das fadenverstärkte Lagerelement 100 weist sechs Befestigungsöffnungen 14, 16, 18, 62, 64 und 66 auf, die in dem elastischen Körper 12 ausgebildet sind. In jeder Befestigungsöffnung 14, 16, 18, 62, 64 und 66 ist eine Buchse 20, 22, 28, 68, 70 und 72 aufgenommen.

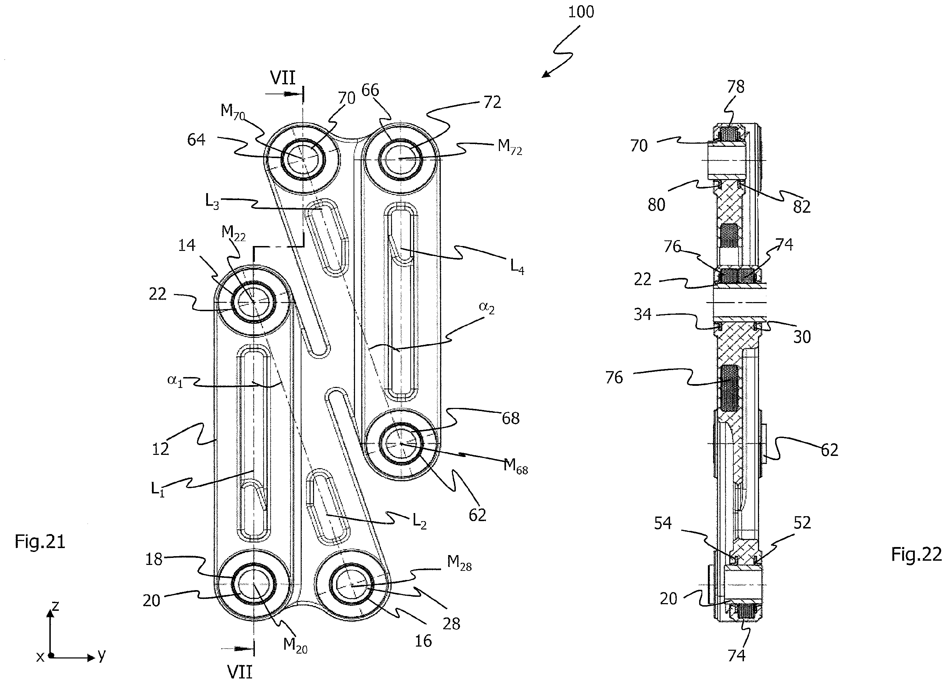

Figur 21 zeigt eine Draufsicht des fadenverstärkten Lagerelements 100. Das Lagerelement 100 weist sechs Befestigungsöffnungen 14, 16, 18, 62, 64 und 66 auf, in denen jeweils eine Buchse 20, 22, 28, 68, 70 und 72 aufgenommen ist. Die Buchsen 20 und 28 sind über jeweils ein Fadenpaket mit der Buchse 22 verbunden. Die Buchsen 70 und 72 sind ebenfalls über jeweils ein Fadenpaket (nicht gezeigt) mit der Buchse 68 verbunden. Die Fadenpakete erstrecken sich in dem elastischen Körper 12. Die Fadenpakete erstrecken sich mit einem Winkel von α₁ und α₂ zueinander in dem elastischen Körper 12. Die Buchsen 20, 28 und 70, 72 sind jeweils um einen vorbestimmten Winkel α₁' und α₂' um die Mittelachsen M₂₂ und M₆₈ der Buchsen 22 und 68 versetzt angeordnet. Die Winkel α₁, α₂ können den Winkeln α₁' und α₂' entsprechen. Die Buchsen 22 und 68 werden von zwei Fadenpaketen umschlungen. Auch die Fadenpakete erstrecken sich ausgehend von den Buchsen 22 und 68 um einen vorbestimmten Winkel zueinander versetzt in Richtung der jeweiligen Buchse 20, 28, 70 und 72 erstrecken. Die Winkel α₁, α₂ und α₁' und α₂' werden zwischen den Linien L₁, L₂ und L₃, L₄ abgetragen. Die Linie L₁ erstreckt sich zwischen der Mittelachse M₂₂ der Buchse 22 und der Mittelachse M₂₈ des Distanzstücks 28. Die Linie L₂ erstreckt sich zwischen der Mittelachse M₂₂ der Buchse 22 und der Mittelachse M₂₀ der Buchse 20. Die Linie L₃ erstreckt sich zwischen der Mittelachse M₇₀ der Buchse 70 und der Mittelachse M₆₈ der Buchse 68. Die Linie L₄ erstreckt sich zwischen der Mittelachse M₇₂ der Buchse 72 und der Mittelachse M₆₈ der Buchse 68.

Der Aufbau des Lagerelements 100 entspricht bezüglich der Anordnung der jeweils drei über Fadenpakete gekoppelten Buchsen 20, 22, 28 bzw. 68, 70, 72 und deren Verbindung über Fadenpakete dem Aufbau des Lagerelements 10 gemäß der voranstehend beschriebenen Ausführungsformen. Anders ausgedrückt enthält das Lagerelement 100 in seinem elastischen Körper 12 zwei separate Anordnungen dreier Buchsen 20, 22, 28 bzw. 68, 70, 72, die jeweils über zwei Fadenpakete (nicht gezeigt) verbunden werden. Jede dieser Anordnungen von drei über Fadenpakete verbundenen Buchsen 20, 22, 28 bzw. 68, 70, 72 entspricht der Anordnung der Fadenpakete und der Buchsen 20, 22, 28 gemäß der ersten Ausführungsform, die mit Bezug auf die Figuren 1 bis 4 beschrieben wurde. Die beiden Anordnungen aus drei über Fadenpakete verbundenen Buchsen 20, 22, 28 bzw. 68, 70, 72 sind ausschließlich über den elastischen Körper 12 miteinander verbunden.

Figur 22 zeigt eine Schnittansicht entlang der Schnittlinie VII-VII in Figur 21. Die Buchse 22 ist über ein Fadenpaket 74 mit der Buchse 20 verbunden. Das Fadenpaket 74 umschlingt die Buchsen 20 und 22. An der Buchse 20 sind die Bundelemente 52 und 54 angeordnet, die das Fadenpaket 74 an der Buchse führen und axial abstützen. Die Buchse 22 wird von einem weiteren Fadenpaket 76 umschlungen, das sich in Richtung der Buchse 28 (siehe Figur 21) erstreckt. Die Fadenpakete 74 und 76 werden über die Bundelemente 30 und 34 an der Buchse 22 gehalten und axial geführt. Die Buchse 70 wird von einem Fadenpaket 78 umschlungen, das von Bundelementen 80 und 82 an der Buchse 70 gehalten wird. Die Bundelemente 80 und 82 sind in Form von L-förmigen Kragen ausgebildet.

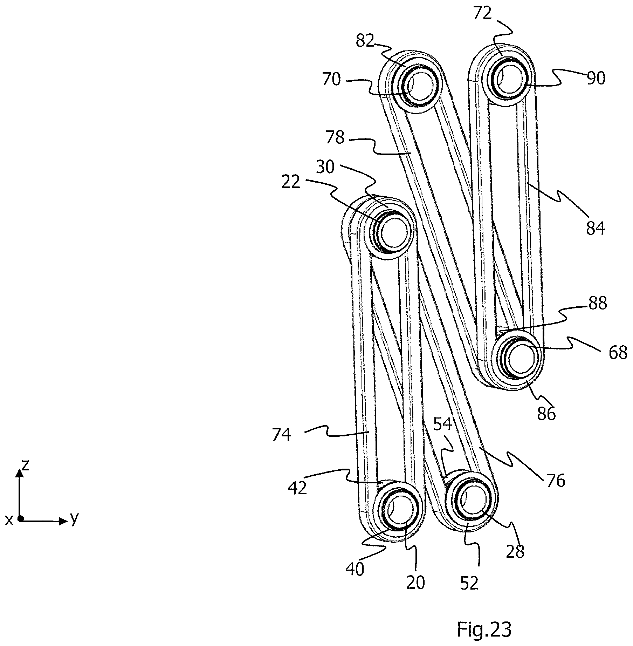

Figur 23 zeigt eine perspektivische Ansicht eines Grundkörpers des fadenverstärkten Lagerelements 100, ohne den elastischen Körper 12. In Figur 23 sind die Buchsen 20, 22, 28, 68, 70 und 72 gezeigt, die über die Fadenpakete 74, 76, 78 und 84 paarweise miteinander verbunden werden. Die Buchsen 20 und 22 werden über das Fadenpaket 76 miteinander verbunden. Die Buchsen 22 und 28 werden von dem Fadenpaket 74 miteinander verbunden. Die Buchsen 68 und 70 werden über das Fadenpaket 78 und die Buchsen 68 und 72 werden über das Fadenpaket 84 verbunden. Die Buchsen 22 und 68 jeweils von zwei Fadenpaketen 74, 76 und 78, 84 umschlungen. Die Fadenpakete 74, 76 und 78, 84 überlappen sich im Bereich an den Buchsen 22 und 68 und erstrecken sich ausgehend von den Buchsen 22 und 68 jeweils in Richtung der anderen ihnen zugeordneten Buchsen 20, 28, 70 und 72.

Die Fadenpakete 74, 76 und 78, 84 werden über im Querschnitt L-förmigen Kragen 30, 40, 42, 52, 54, 82, 86, 88 und 90 an den Buchsen 20, 22, 28, 68, 70 und 72 gesichert. Jedem Fadenpaket 74, 76 und 78, 84 sind zwei Bundelemente 30, 40, 42, 52, 54, 82, 86, 88 und 90 zugeordnet, auch wenn insbesondere in Figur 8 teilweise nur ein dem jeweiligen Fadenpaket 74, 76 und 78, 84 zugeordnetes Bundelement gezeigt ist.

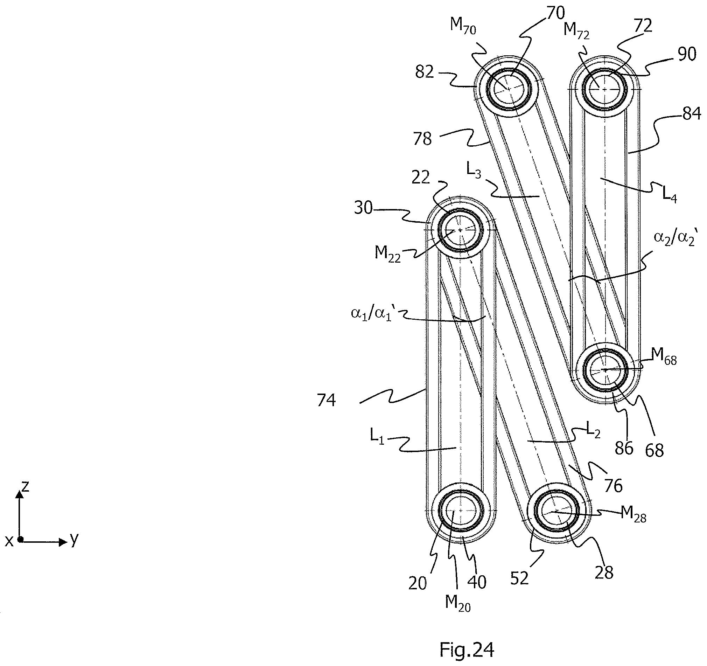

Figur 24 zeigt eine Draufsicht eines Grundkörpers des fadenverstärkten Lagerelements 100. Die Buchsen 20 und 28 sind um einen vorbestimmten Winkel α₁ um die Mittelachse M₂₂ der Buchse 22 versetzt angeordnet. Der Winkel α₁ wird wie bei der ersten Ausführungsform zwischen den gedachten Linien L₁ und L₂ abgetragen, die sich in der die Mittelachse M₂₂ der Buchse 22 schneiden. Auch die Buchsen 70 und 72 sind um einen vorbestimmten Winkel α₂ um die Mittelachse M₆₈ der Buchse 68 versetzt angeordnet. Der Winkel α₂ wird zwischen den gedachten Linien L₃ und L₄ abgetragen, die sich in der die Mittelachse M₆₈ der Buchse 68 schneiden.

Das Fadenpaket 74 (erstes Fadenpaket) und das Fadenpaket 76 (zweites Fadenpaket) überlappen sich im Bereich an der Buchse 22 und erstrecken sich ausgehend von der Buchse 22 in Richtung der Buchse 20 (Fadenpaket 74) und der Buchse 28 (Fadenpaket 76). Das Fadenpaket 78 (drittes Fadenpaket) und das Fadenpaket 84 (viertes Fadenpaket) überlappen sich ebenfalls im Bereich an der Buchse 68 und erstrecken sich dann in Richtung der Buchse 70 (Fadenpaket 78) und der Buchse 72 (Fadenpaket 84). Die Fadenpakete 74, 76, 78, 84 weisen im Bereich zwischen den Buchsen 20, 22, 28, 68, 70 und 72 parallele Stränge auf. Die parallelen Stränge der Fadenpakete 74, 76, 78, 84 verlaufen mit einem vorbestimmten Winkel zueinander, um die einzelnen Buchsen 20, 22, 28, 68, 70 und 72 paarweise zugkraftübertragend miteinander koppeln zu können.

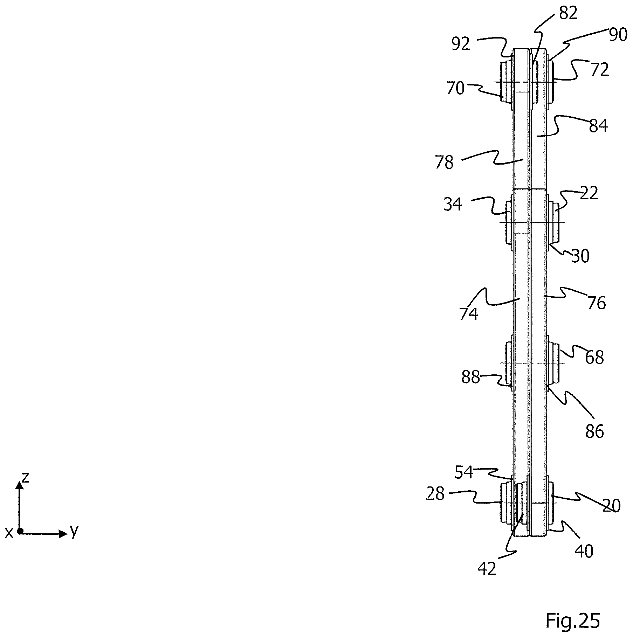

Figur 25 zeigt eine Seitenansicht des Grundkörpers des fadenverstärkten Lagerelements 100. In Figur 25 sind die Fadenpakete 74, 76 erkennbar, die die Buchsen 20, 22 und 28 miteinander verbinden. Die Fadenpakete 74 und 76 werden an der Buchse 22 mittels der Bundelemente 30 und 34 gesichert. Die Bundelemente 40 und 42 halten das Fadenpaket 74 an der Buchse 28. Das Fadenpaket 76 wird von den Bundelementen 52 und 54 an der Buchse 20 gehalten. Die Bundelemente 86 und 88 halten die Fadenpakete 78 und 84 an der Buchse 68. An der Buchse 70 wird das Fadenpaket 78 über die Bundelemente 82 und 92 gehalten. An der Buchse 72 ist das Bundelement 90 und ein weiteres nicht gezeigtes Bundelement vorgesehen, um das Fadenpaket 84 an dieser Buchse zu sichern.

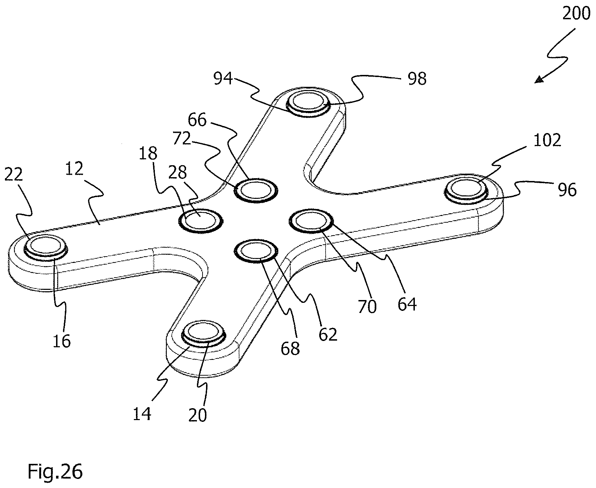

Figur 26 zeigt eine perspektivische Ansicht eines fadenverstärkten Lagerelements 200. Der elastische Körper 12 des Lagerelements ist im Wesentlichen X-förmig ausgebildet und weist acht Befestigungsöffnungen 14, 16, 18, 62, 64, 66, 94 und 96 auf. In jeder der Befestigungsöffnungen 14, 16, 18, 62, 64, 66, 94 und 96 ist eine Buchse 20, 22, 28, 68, 70, 72, 98 und 102 aufgenommen. Die Befestigungsöffnungen 14, 22, 94 und 96 und die darin aufgenommenen Buchsen 20, 22, 98 und 102 befinden sich an den äußeren Enden der Schenkel der X-Form des Lagerelements 200. Die Befestigungsöffnungen 18, 62, 64 und 66 befinden sich mit den ihnen zugeordneten Buchsen 28, 68, 70 und 72 in dem zentralen Bereich der X-Form, d.h. im Schnittbereich der Schenkel der X-Form.

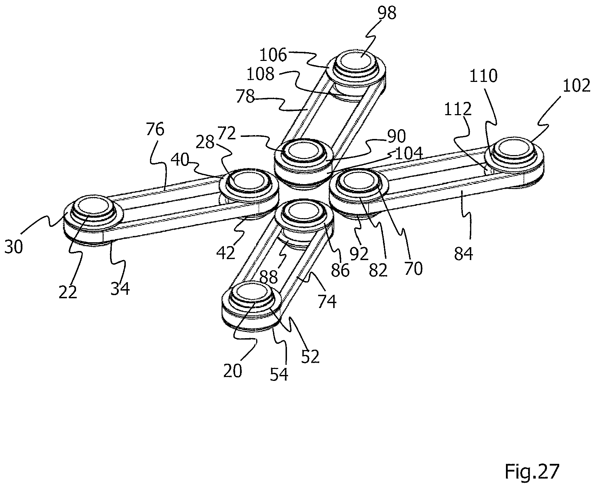

Figur 27 zeigt eine perspektivische Ansicht des Grundkörpers des Lagerelements 200. Das Lagerelement 200 weist vier Fadenpakete 74, 76, 78 und 84 auf, die jeweils zwei Buchsen 20, 22, 28, 68, 70, 72, 98 und 102 miteinander verbinden. Das Fadenpaket 74 verbindet bzw. umschlingt die Buchsen 20 und 68. Das Fadenpaket 76 verbindet die Buchsen 22 und 28. Das Fadenpaket 78 verbindet die Buchsen 72 und 98. Das Fadenpaket 84 umschlingt die Buchsen 70 und 102. Die Fadenpakete 74, 76, 78 und 84 werden über Bundelemente 30, 34, 40, 42, 52, 54, 82, 86, 88, 90, 92, 104, 106, 108, 110 und 112 an den Buchsen 20, 22, 28, 68, 70, 72, 98 und 102 gehalten. Die Bundelemente 30, 34, 40, 42, 52, 54, 82, 86, 88, 90, 92, 104, 106, 108, 110 und 112 sind im Querschnitt in Form von L-förmigen Kragen ausgebildet. Die Fadenpakete 74, 76, 78 und 84 sind im Wesentlichen gleich lang und weisen denselben Querschnitt auf.

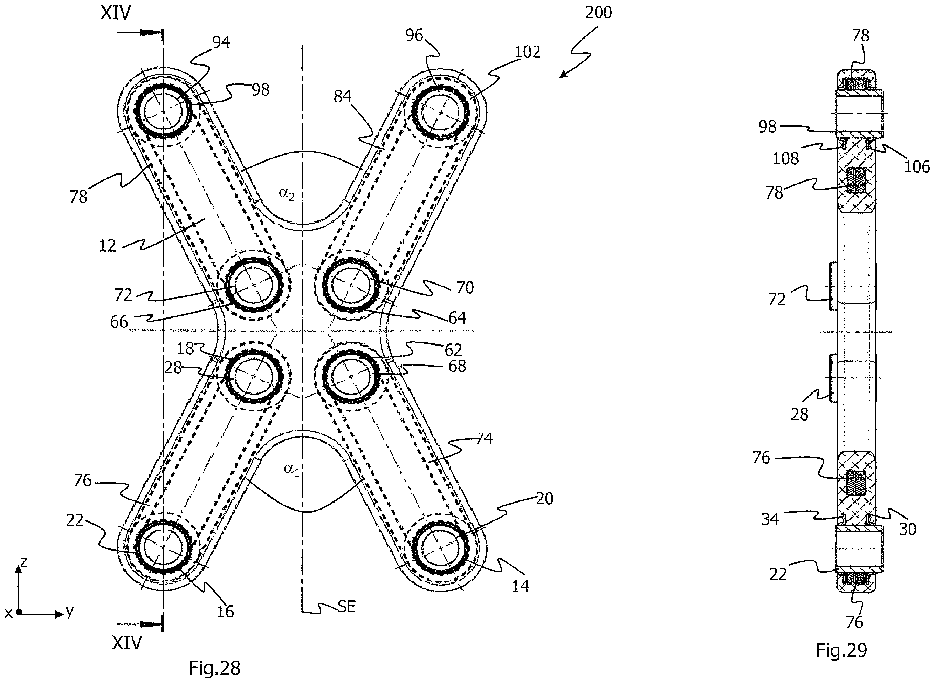

Figur 28 zeigt eine Draufsicht des Lagerelements 200.In Figur 28 wird die X-Form des elastischen Körpers 12 des Lagerelements 200 deutlich. Die Buchsen 20, 22, 98 und 102 sind an den äußeren Enden der Schenkel der X-Form des elastischen Körpers 12 angeordnet. Von den Buchsen 20, 22, 98 und 102 erstrecken sich die Fadenpakete 74, 76, 78 und 84 in dem elastischen Körper 12 in Richtung der jeweils anderen Buchse 28, 68, 70 und 72, die in einem zentralen Bereich des elastischen Körpers 12 des Lagerelements 200 angeordnet sind. In Figur 28 ist die Symmetrieachse SE eingezeichnet. Das fadenverstärkte Lagerelement 200 ist achsensymmetrisch bzw. spiegelsymmetrisch aufgebaut. Die Fadenpakete 74 und 76 erstrecken sich mit dem Winkel α₁ zueinander in dem elastischen Körper 12, wodurch sich der Abstand zwischen den Fadenpaketen 74 und 76 entlang der Symmetrieachse SE vergrößert. Die Fadenpakete 78 und 84 erstrecken sich mit einem Winkel α₂ zueinander in dem elastischen Körper 12. Auch hier vergrößert sich der Abstand entlang der Symmetrieachse SE.

Figur 29 zeigt eine Schnittansicht entlang der Schnittlinie XIV-XIV in Figur 28. Die Buchse 22 wird von dem Fadenpaket 76 umschlungen. Das Fadenpaket 76 wird über die im Querschnitt L-förmigen Bundelemente 30, 34 an der Buchse 22 axial abgestützt. Die Buchse 98 wird von dem Fadenpaket 78 umschlungen, das von den Bundelementen 106 und 108 an der Buchse 98 gehalten wird.

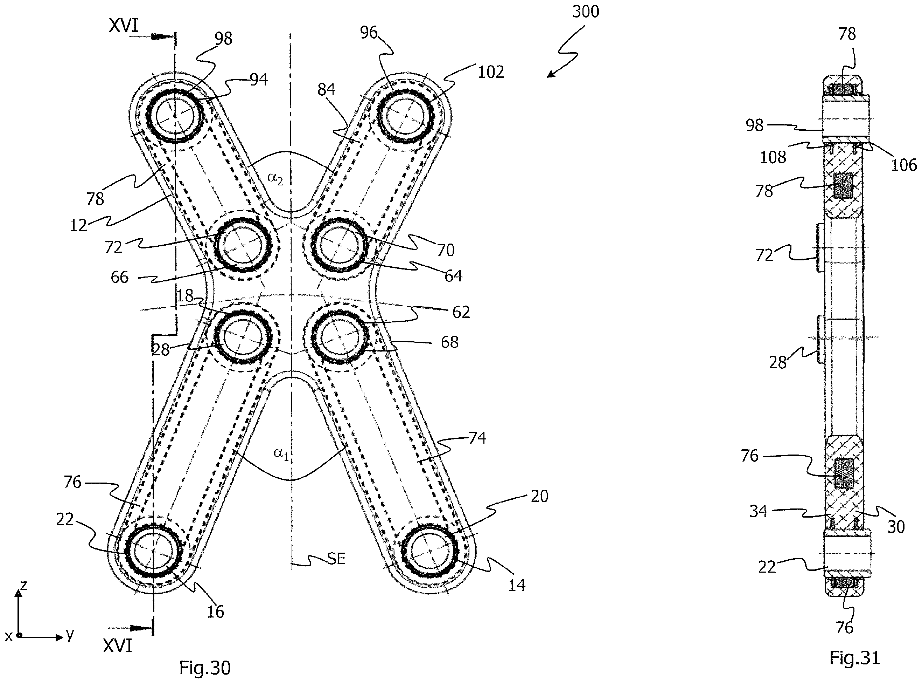

Die Figuren 30 und 31 zeigen ein fadenverstärktes Lagerelement 300. Der elastische Körper 12 des Lagerelements 300 ist im Wesentlichen X-förmig ausgebildet. Der Aufbau des Lagerelements 300 gemäß dieser Ausführungsform entspricht weitgehend dem Aufbau des Lagerelements 200, das voranstehend beschrieben wurde. Auch das fadenverstärkte Lagerelement 300 ist achsensymmetrisch aufgebaut, wie anhand der Symmetrieachse SE erkennbar ist. Die Fadenpakete 74 und 76 erstrecken sich mit dem Winkel α₁ zueinander in dem elastischen Körper 12, wodurch sich der Abstand zwischen den Fadenpaketen 74 und 76 entlang der Symmetrieachse SE vergrößert. Gleiches gilt für die Fadenpakete 78 und 84, die sich mit einem Winkel α₂ zueinander in dem elastischen Körper 12 erstrecken. Der einzige wesentliche Unterschied zwischen diesen beiden Ausführungsformen liegt darin, dass die Fadenpakete 78 und 84 kürzer als die Fadenpakete 74 und 76 ausgebildet sind. Dadurch sind die in Figur 30 "oberen" Schenkel der X-Form des elastischen Körper 12 kürzer ausgebildet als die in Figur 30 "unteren" Schenkel der X-Form.

Figur 31 zeigt eine Schnittansicht entlang der Schnittlinie XVI-XVI in Figur 30. Die Buchse 22 wird von dem Fadenpaket 76 umschlungen. Das Fadenpaket 76 wird über die im Querschnitt L-förmigen Bundelemente 30, 34 an der Buchse 22 axial abgestützt. Die Buchse 98 wird von dem Fadenpaket 78 umschlungen, das von den Bundelementen 106 und 108 an der Buchse 98 gehalten wird.

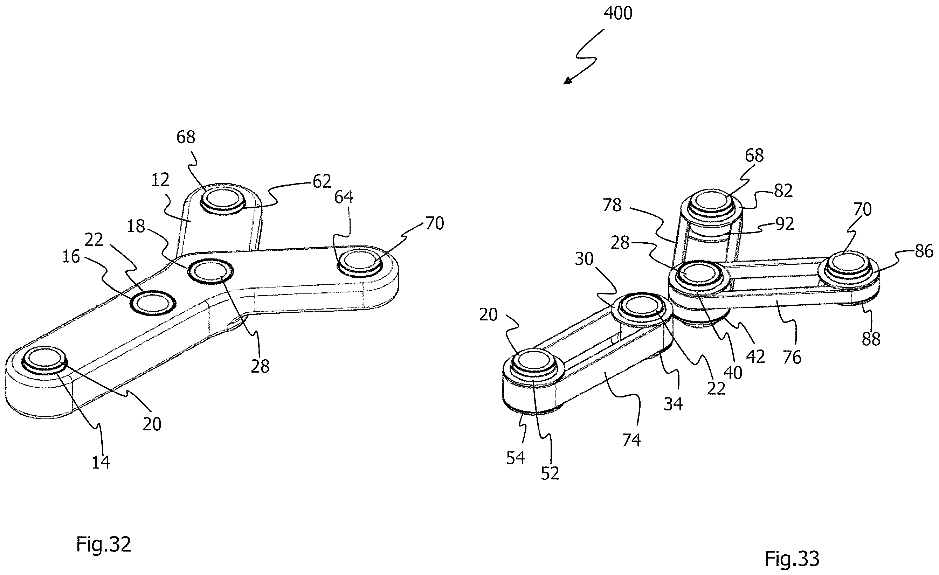

Figur 32 zeigt eine perspektivische Ansicht eines fadenverstärkten Lagerelements 400.Der elastische Körper 12 des Lagerelements 400 ist im Wesentlichen Y-förmig ausgebildet und weist fünf Befestigungsöffnungen 14, 16, 18, 62 und 64 auf. In jeder der Befestigungsöffnungen 14, 16, 18, 62 und 64 ist jeweils eine Buchse 20, 22, 28, 68, 70 aufgenommen. Die Buchsen 20, 22, 28 bzw. die Befestigungsöffnungen 14, 16, 18 mit den genannten Buchsen sind im Wesentlichen auf einer Linie angeordnet. Ausgehend von der Buchse 28 erstrecken sich die beiden Schenkel der Y-Form in Richtung der Buchsen 68 und 70.

Figur 33 zeigt eine perspektivische Ansicht des Grundkörpers des fadenverstärkten Lagerelements 400. Die Buchsen 20 und 22 werden von dem Fadenpaket 74 umschlungen. Das Fadenpaket 74 wird von den Bundelementen 30, 34, 52 und 54 an den Buchsen 20 und 22 gehalten. Die Buchsen 28, 68 und 70 werden über die Fadenpakete 76 und 78 miteinander verbunden. Die Fadenpakete 76, 78 umschlingen die Buchse 28 und erstrecken sich ausgehend von der Buchse 28 in Richtung der Buchsen 68 und 70. Das Fadenpaket 76 umschlingt die Buchsen 28 und 68. Das Fadenpaket 78 umschlingt die Buchsen 28 und 70. Die Fadenpakete 76 und 78 sind in axialer Richtung versetzt an der Buchse 28 vorgesehen. Das Fadenpaket 74 weist einen größeren Querschnitt auf als die Fadenpakete 76 und 78. Der Querschnitt des Fadenpakets 74 in axialer Richtung der Buchsen entspricht im Wesentlichen dem Querschnitt der Fadenpakete 76 und 78 zusammen.

Figur 34 zeigt eine Draufsicht des fadenverstärkten Lagerelements 400. Das Lagerelement 400 ist im Wesentlichen Y-förmig ausgebildet. Das Fadenpaket 74 erstreckt sich in dem elastischen Körper 12 zwischen den Buchsen 20 und 22. Ausgehend von der Buchse 28 erstrecken sich die Fadenpakete 76 und 78 in dem elastischen Körper 12 jeweils in Richtung der Buchsen 68 und 70. Die Achsen M₂₀, M₂₂ und M₂₈ liegen auf einer gedachten Linie L₁, die der Symmetrieachse SE des fadenverstärkten Lagerelements 400 entspricht. Das Lagerelement 400 ist somit spiegelsymmetrisch aufgebaut. Zwischen den Buchsen 70 und 28 erstreckt sich eine gedachte Linie L₂. Zwischen den Buchsen 68 und 28 erstreckt sich eine weitere gedachte Linie L₃. Die Linien L₁, L₂ und L₃ schneiden sich in der Mittelachse M₂₈ der Buchse 28. Die Linien L₂ und L₃ erstrecken sich mit einem vorbestimmten Winkel α zueinander. Die Buchsen 68 und 70 mit ihren Mittelachsen M₆₈ und M₇₀ sind um die Mittelachse M₂₈ der Buchse 28 um den vorbestimmten Winkel α' zueinander versetzt angeordnet. Die Fadenpakete 76 und 78 erstrecken sich mit dem Winkel α zueinander in dem elastischen Körper. Der Winkel α entspricht dem Winkel α'.

Figur 35 zeigt eine Schnittansicht entlang der Schnittlinie XX-XX in Figur 34. Das Fadenpaket 74 wird über die Bundelemente 52 und 54 an der Buchse 20 und über die Bundelemente 30 und 34 an der Buchse 22 gehalten. Das Fadenpaket 74 weist in axialer Richtung der Buchsen einen größeren Querschnitt als die Fadenpakete 76 und 78 auf. Der Querschnitt des Fadenpakets 74 in axialer Richtung der Buchsen entspricht im Wesentlichen den Querschnitten der Fadenpakete 76 und 78 zusammen.

Das Fadenpaket 78 erstreckt sich in Richtung der Buchse 70. Das Fadenpaket 78 umschlingt die Buchsen 28 und 70. Das Fadenpaket 78 wird zusammen mit dem Fadenpaket 76 über die Bundelemente 40 und 42 an der Buchse 28 gehalten. An der Buchse 70 wird das Fadenpaket über die Bundelemente 82 und 92 gehalten. Da die beiden Fadenpakete 76 und 78 sich in axialer Richtung versetzt zueinander in Richtung der Buchsen 68 und 70 (siehe Figur 34) erstrecken, weist der elastische Körper 12 eine Stufe 26 auf, die auch in Figur 34 erkennbar ist.

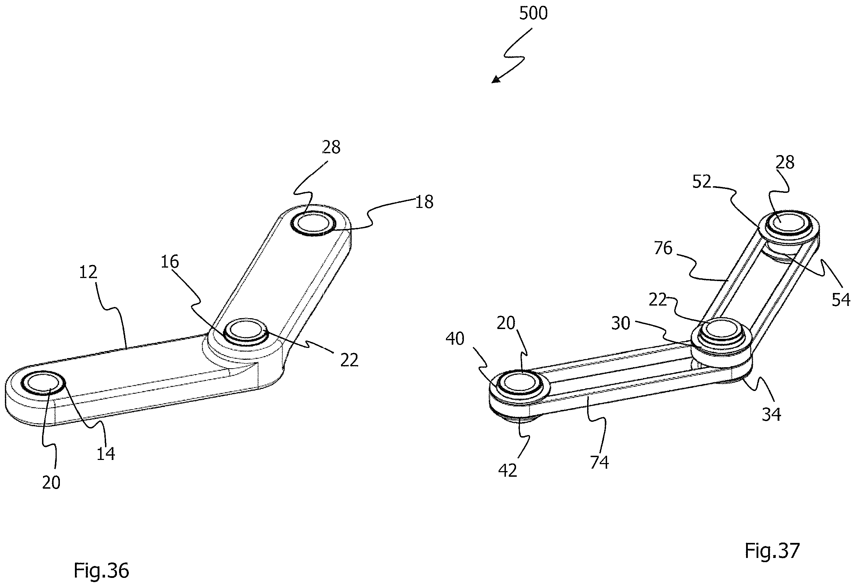

Figur 36 zeigt eine perspektivische Ansicht eines fadenverstärkten Lagerelements 500. Das fadenverstärkte Lagerelement 500 ist abgewinkelt und weist einen elastischen Körper 12 auf, in dem drei Befestigungsöffnungen 14, 16 und 18 ausgebildet sind. Jede Befestigungsöffnungen 14, 16 und 18 nimmt jeweils eine Buchse 20, 22 und 28 auf.

Figur 37 zeigt eine perspektivische Ansicht des Grundkörpers des fadenverstärkten Lagerelements 500. Die Buchsen 20, 22 und 28 werden über die Fadenpakete 74 und 76 miteinander verbunden. Die Fadenpakete 74 und 76 umschlingen beide die Buchse 22 und erstrecken sich dann jeweils in Richtung einer der Buchsen 20 oder 28. An der Buchse 28 wird das Fadenpaket 76 über im Querschnitt L-förmigen Bundelemente 52 und 54 gehalten. Die Bundelemente 30 und 34 sichern die beiden Fadenpakete 74 und 76 an der Buchse 22. An der Buchse 20 wird das Fadenpaket 74 über die Bundelemente 40 und 42 gehalten.

Figur 38 zeigt eine Draufsicht des fadenverstärkten Lagerelements 500.In dem elastischen Körper 12 erstrecken sich die Fadenpakete 74 und 76 zwischen den Buchsen 20, 22 und 28. Die beiden Fadenpakete 74 und 76 umschlingen die Buchse 22. Ausgehend von der Buchse 22 erstreckt sich das Fadenpaket 74 in Richtung der Buchse 20, um diese zu umschlingen. Das Fadenpaket 76 erstreckt sich ausgehend von der Buchse 22 in Richtung der Buchse 28. Die Mittelachse M₂₀ der Buchse 20 und die Mittelachse M₂₂ der Buchse 22 liegen auf einer gedachten L₁. Die Mittelachse M₂₂ der Buchse 22 und die Mittelachse M₂₈ der Buchse 28 liegen auf einer gedachten Linie L₂. Die Linien L₁ und L₂ schneiden sich in der Mittelachse M₂₂ der Buchse 22. Die Linien L₁ und L₂ erstrecken sich mit einem vorbestimmten Winkel α zueinander. Die Buchsen 20 und 22 sind somit um den vorbestimmten Winkel α um die Mittelachse M₂₂ der Buchse 22 zueinander versetzt angeordnet. Der Winkel α entspricht im Wesentlichen 125°.

Figur 39 zeigt eine Schnittansicht des fadenverstärkten Lagerelements 500 entlang der Schnittlinie XXIV-XXIV in Figur 38. Die Fadenpakete umschlingen in axialer Richtung der Buchsen zueinander versetzt Buchse 22. An der Buchse 22 werden die Fadenpakete 74 und 76 von den Bundelementen 30 und 34 gehalten. Ausgehend von der Buchse 22 erstreckt sich das Fadenpaket 74 zur Buchse 20 und umschlingt diese. An der Buchse 20 wird das Fadenpaket 74 von den Bundelementen 52 und 54 gehalten. Das Fadenpaket 76 wird über die Bundelemente 40 und 42 an der Buchse 28 axial abgestützt. Die Fadenpakete 74 und 76 sind in axialer Richtung der Buchsen zueinander versetzt angeordnet. Dieser axiale Versatz der Fadenpakete 74 und 76 wird durch die Stufen 26 und 60 an dem elastischen Körper 12 deutlich. Der axiale Versatz entspricht im Wesentlichen der axialen Erstreckung eines Fadenpakets 74 oder 76 in axialer Richtung.

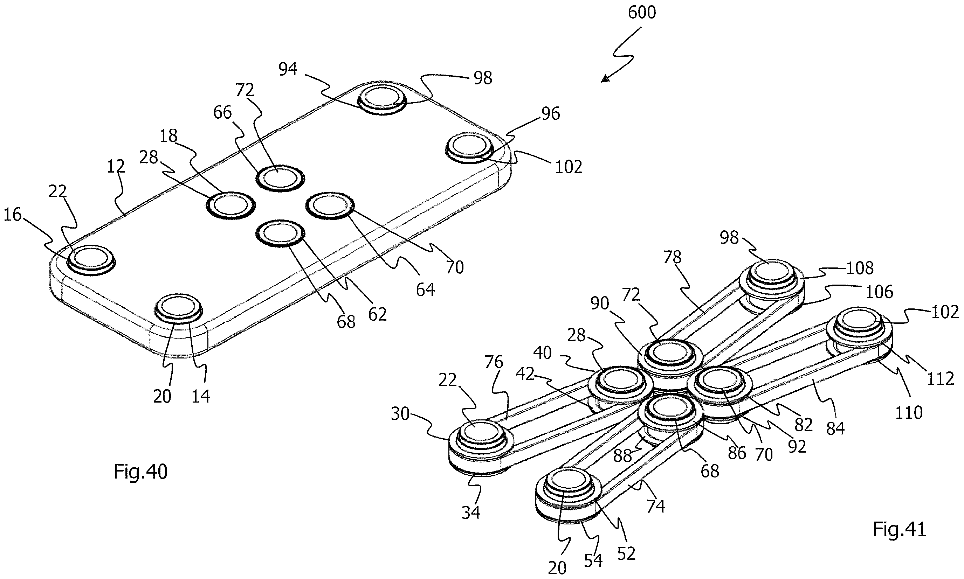

Figur 40 zeigt eine perspektivische Ansicht eines fadenverstärkten Lagerelements 600. Der elastische Körper 12 des Lagerelements ist plattenförmig und rechteckig ausgebildet und weist acht Befestigungsöffnungen 14, 16, 18, 62, 64, 66, 94 und 96 auf. In jeder der Befestigungsöffnungen 14, 16, 18, 62, 64, 66, 94 und 96 ist eine Buchse 20, 22, 28, 68, 70, 72, 98 und 102 aufgenommen. Die Befestigungsöffnungen 14, 22, 94 und 96 und die darin aufgenommenen Buchsen 20, 22, 98 und 102 sind jeweils in einer Ecke des rechteckigen elastischen Körpers 12 des Lagerelements 600 angeordnet. Die Befestigungsöffnungen 18, 62, 64 und 66 befinden sich mit den ihnen zugeordneten Buchsen 28, 68, 70 und 72 in dem zentralen Bereich des elastischen Körpers 12.

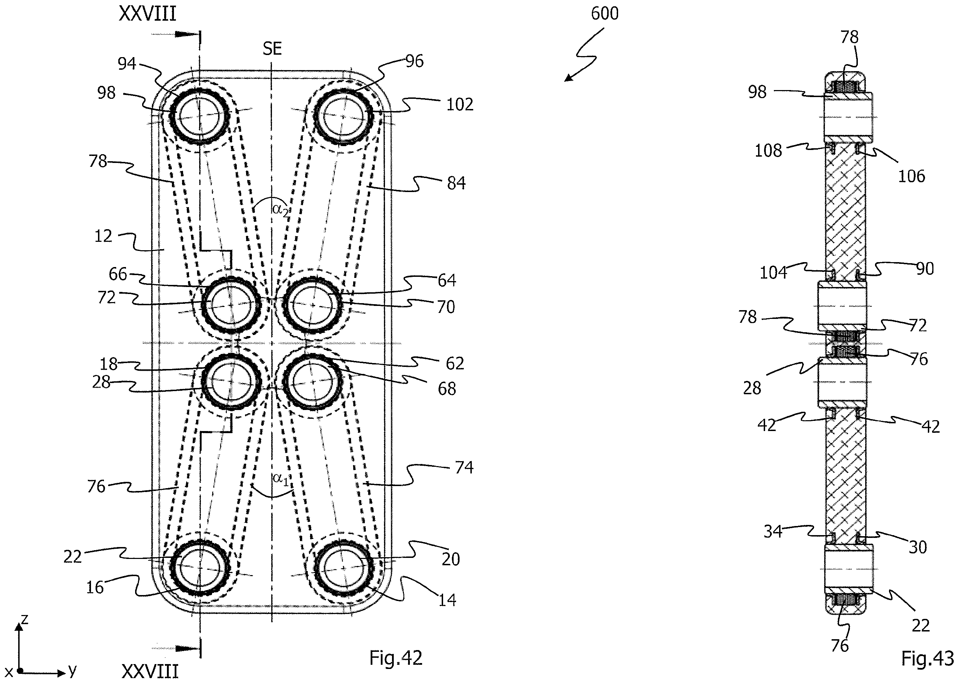

Figur 41 zeigt eine perspektivische Ansicht des Grundkörpers des Lagerelements 200. Das Lagerelement 200 weist vier Fadenpakete 74, 76, 78 und 84 auf, die jeweils zwei Buchsen 20, 22, 28, 68, 70, 72, 98 und 102 miteinander verbinden. Das Fadenpaket 74 verbindet bzw. umschlingt die Buchsen 20 und 68. Das Fadenpaket 76 verbindet die Buchsen 22 und 28. Das Fadenpaket 78 verbindet die Buchsen 72 und 98. Das Fadenpaket 84 umschlingt die Buchsen 70 und 102. Die auf diese Weise gebildeten Buchsenpaare sind untereinander nur durch den elastischen Körper 12 miteinander verbunden (siehe Figur 42).Die Fadenpakete 74, 76, 78 und 84 werden über Bundelemente 30, 34, 40, 42, 52, 54, 82, 86, 88, 90, 92, 104, 106, 108, 110 und 112 an den Buchsen 20, 22, 28, 68, 70, 72, 98 und 102 gehalten. Die Bundelemente 30, 34, 40, 42, 52, 54, 82, 86, 88, 90, 92, 104, 106, 108, 110 und 112 sind im Querschnitt in Form von L-förmigen Kragen ausgebildet. Die Fadenpakete 74, 76,78 und 84 sind im Wesentlichen gleich lang und weisen denselben Querschnitt auf. Die Fadenpakete 74, 76, 78 und 84 sind X-förmig angeordnet. Die Fadenpakete 74, 76, 78 und 84 verlaufen somit abgewinkelt zueinander. Die Buchsen 28, 68, 70 und 72 sind benachbart aneinander angeordnet. Ausgehend von den Buchsen 28, 68, 70 und 72 erstrecken sich die Fadenpakete 74, 76, 78 und 84 in Richtung der äußeren Buchsen 20, 22, 98 und 102.

Figur 42 zeigt eine Draufsicht des Lagerelements 600. Die Fadenpakete 74, 76, 78 und 84 erstrecken sich X-förmig in dem elastischen Körper 12 des Lagerelements 600. Die Buchsen 20, 22, 98 und 102 sind an der Außenkante des elastischen Körpers 12 in den Ecken des Rechtecks angeordnet. Von den Buchsen 20, 22, 98 und 102 erstrecken sich die Fadenpakete 74, 76, 70, 78 und 84 in dem elastischen Körper 12 in Richtung der jeweils anderen Buchse 28, 68, 70 und 72, die in einem zentralen Bereich des elastischen Körpers 12 des Lagerelements 200 angeordnet sind. Anders ausgedrückt erstrecken sich die Fadenpakete 74, 76, 70, 78 und 84 ausgehend von den in einem zentralen Bereich des elastischen Körpers 12 angeordneten Buchsen 28, 68, 70 und 72 X-förmig nach außen. Die Fadenpakete 74 und 76 erstrecken sich mit dem Winkel α₁ zueinander in dem elastischen Körper 12, wodurch sich der Abstand zwischen den Fadenpaketen 74 und 76 entlang der Symmetrieachse SE vergrößert. Die Fadenpakete 78 und 84 erstrecken sich mit einem Winkel α₂ zueinander in dem elastischen Körper 12. Auch hier vergrößert sich der Abstand entlang der Symmetrieachse SE. Die Fadenpakete 74, 76, 78 und 84 umschlingen die Buchsen 20, 22, 28, 68, 70, 72, 98 und 102 zur Bildung von Buchsenpaaren paarweise. Die gebildeten Buchsenpaare sind untereinander nur über den elastischen Körper 12 miteinander verbunden.

Figur 43 zeigt eine Schnittansicht entlang der Schnittlinie XXVIII-XXVIII in Figur 42. Die Buchsen 22 und 28 werden von dem Fadenpaket 76 umschlungen. Das Fadenpaket 76 wird über die im Querschnitt L-förmigen Bundelemente 30, 34, 40 und 42 an den Buchsen 22 und 28 axial abgestützt. Die Buchsen 72 und 98 werden von dem Fadenpaket 78 umschlungen, das von den Bundelementen 90, 104, 106 und 108 an den Buchsen 72 und 98 gehalten wird.

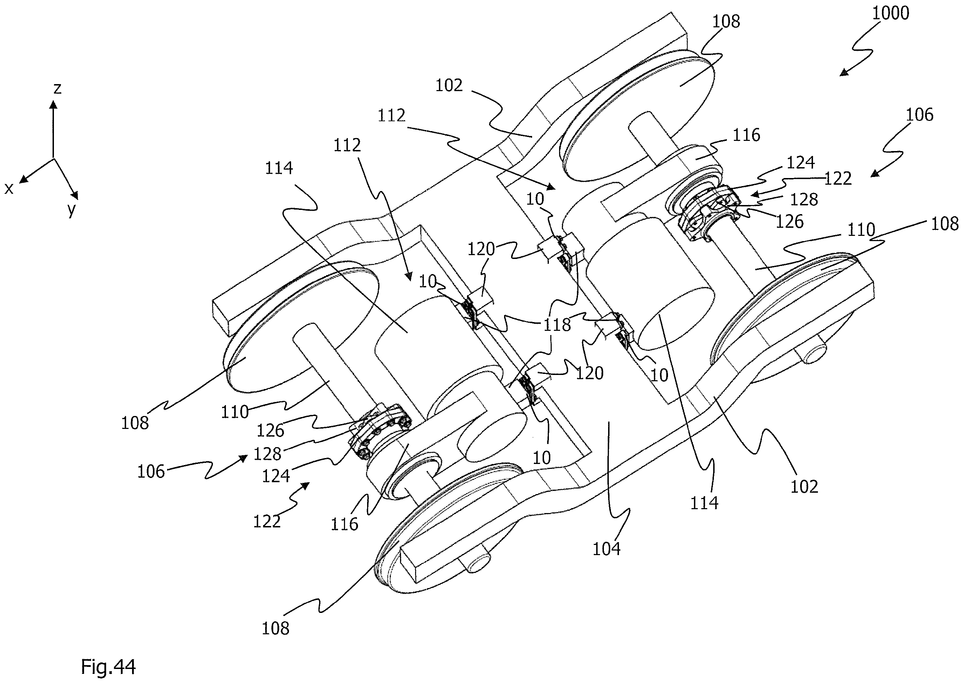

Figur 44 zeigt eine perspektivische Ansicht eines Abschnitts eines Drehgestells 1000 eines Schienenfahrzeugs. Das Drehgestell 1000 weist zwei sich parallel erstreckende Rahmenelemente 102 und ein sich quer zu den beiden Rahmenelementen 102 erstreckendes Querelement 104 auf. An dem Drehgestell 1000 ist eine Radsatz 106 gelagert. Der Radsatz 106 weist zwei Schienenfahrzeugräder 108 auf, die über eine Radsatzwelle 110 miteinander verbunden sind. Der Radsatz 106 wird über eine Motor-Getriebe-Einheit 112 angetrieben.

Die Motor-Getriebe-Einheit 112 weist einen Motor 114 und ein Getriebe 116 auf. Das von dem Motor 114 bereitgestellte Drehmoment wird von dem Getriebe 116 übersetzt und auf die Radsatzwelle 110 übertragen. An der Motor-Getriebe-Einheit 112 sind Lagerstellen 118 ausgebildet. An dem Drehgestell 1000 sind Lagerstellen 120 ausgebildet. Die Lagerstellen 120 sind an dem Querelement 104 des Drehgestells 1000 vorgesehen. Die fadenverstärkten Lagerelemente 10 verbinden die Lagerstellen 118 an der Motor-Getriebe-Einheit 112 mit den Lagerstellen 120 an dem Drehgestell 1000. Die fadenverstärkten Lagerelemente 10 sind über Verbindungselemente mit den Lagerstellen 118, 120 verbunden. Diese Verbindungselemente können beispielsweise Schrauben sein.

Die Motor-Getriebe-Einheit 112 stützt sich über die Kupplungsvorrichtung 122 an der Radsatzwelle 110 ab. Die Kupplung 122 weist eine fadenverstärkte Gelenkvorrichtung 124, einen ersten Flansch 126 und einen zweiten Flansch 128 auf. Die fadenverstärkte Gelenkvorrichtung 124 verbindet den ersten Flansch 126 mit dem zweiten Flansch 128. Die fadenverstärkte Gelenkvorrichtung 124 ist eine Gelenkscheibe oder ein Laschenring. Die fadenverstärkte Gelenkvorrichtung 124 weist wenigstens einen elastischen Körper EK auf, in den ein oder mehrere Fadenpakete (nicht gezeigt) eingebettet sind. Mit dem ersten Flansch 126 ist die Kupplungsvorrichtung 122 mit der Getriebeausgangswelle 130 des Getriebes 116 verbunden. Mit dem zweiten Flansch 128 ist die Kupplung 122 mit der Radsatzwelle 110 verbunden. Die Kupplung 122 weist eine hohe radiale Steifigkeit auf. Dadurch kann die Kupplung 122 die Funktion eines Lagers für die Motor-Getriebe-Einheit 112 erfüllen.

Die Lagerelemente 10 haben in x-Richtung, γ-Richtung und z-Richtung unterschiedliche Steifigkeiten. In z-Richtung weisen die Lagerelemente 10 eine relativ hohe Steifigkeit auf, da in z-Richtung die Fadenpakete (nicht gezeigt) der Lagerelemente in Zugrichtung 10 belastet werden. In z-Richtung stützen die Lagerelemente 10 zumindest einen Teil der Gewichtskraft der Motor-Getriebe-Einheit 112 ab und sind deshalb in z-Richtung sehr steif. In γ-Richtung sind die Lagerelemente 10 etwas weniger steif, da die Fadenpakete (nicht gezeigt) in den Lagerelemente 10 aufgrund des Winkels, mit dem sich zueinander erstrecken, in γ-Richtung nur teilweise auf Zug belastet werden. Zumindest die Steifigkeit in γ-Richtung und in z-Richtung kann durch den Winkel der Fadenpakete zueinander eingestellt werden. In x-Richtung weisen die Lagerelemente 10 eine geringe Steifigkeit auf, da in x-Richtung der Radsatz 106 bei einem Bremsvorgang in x-Richtung ausgelenkt wird. Bei einer Auslenkung des Radsatzes 106 muss die gesamte Motor-Getriebe-Einheit 112 der Auslenkung des Radsatzes 106 folgen, wobei dieser Effekt durch die Radialsteifigkeit der Kupplungsvorrichtung 122 reduziert wird. Die Lagerelemente 10 müssen somit in x-Richtung weich sein, um eine Bewegung der Motor-Getriebe-Einheit 112 bei einer Auslenkung des Radsatzes 106 zuzulassen bzw. ausgleichen zu können.

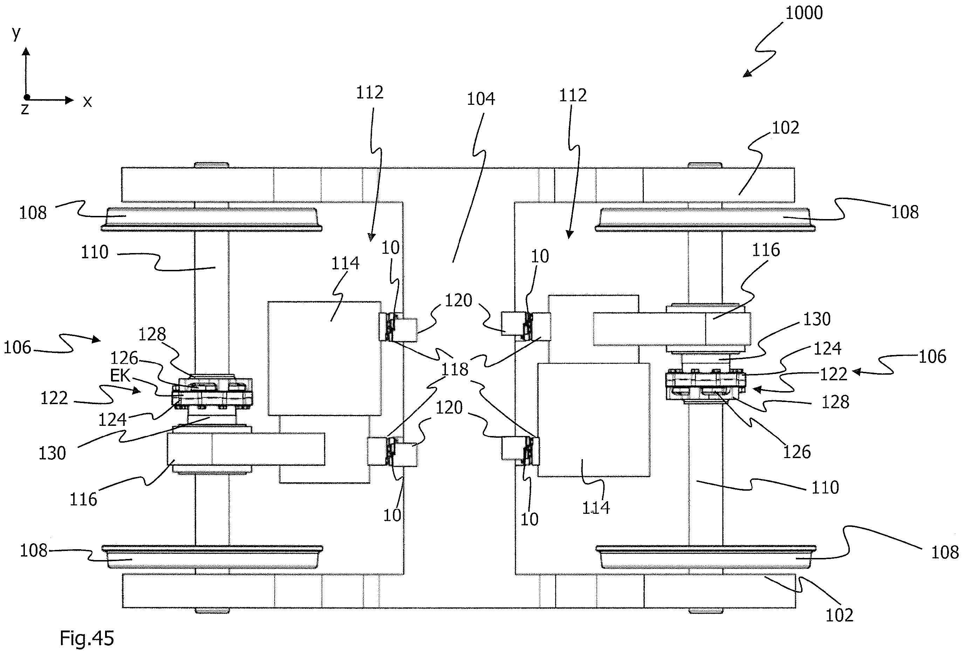

Figur 45 zeigt eine Draufsicht des Drehgestells 1000 gemäß Figur 44. Figur 45 zeigt eine Draufsicht des Drehgestells 1000 gemäß Figur 44. In Figur 45 sind die beiden Radsätze 106 an dem Drehgestell 1000 gezeigt, die zwei Räder 108 und eine Radsatzwelle 110 aufweisen. Die Motor-Getriebe-Einheit 112 stützt sich über die Kupplungsvorrichtung 122 an der Radsatzwelle 110 ab. Die Motor-Getriebe-Einheit 112 ist über die Lagerelemente 10 an dem Drehgestell 1000 gelagert.

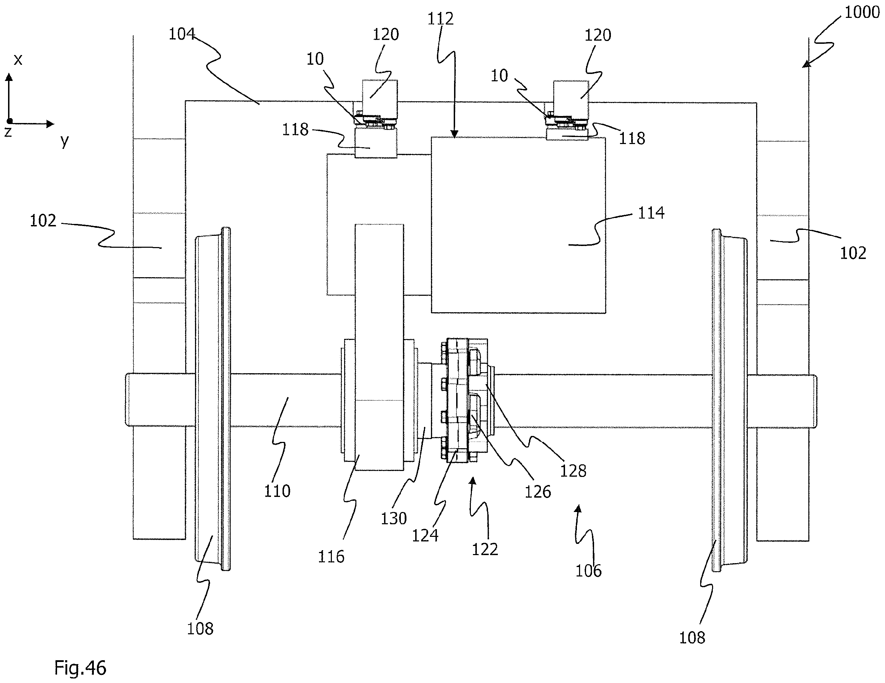

Figur 46 zeigt einen vergrößerten Ausschnitt der Draufsicht gemäß Figur 45. Die Motor-Getriebe-Einheit 112 ist über die Lager 10 an dem Drehgestell 1000 gelagert. An der Motor-Getriebe-Einheit 112 sind die Lagerstellen 118 ausgebildet. Auch an dem Querelement 104 des Drehgestells 1000 sind die Lagerstellen 120 ausgebildet. Die fadenverstärkten Lagerelemente 10 sind über Verbindungselemente mit den Lagerstellen 118, 120 verbunden, um die Motor-Getriebe-Einheit 112 an dem Drehgestell 1000 zu lagern. Die Motor-Getriebe-Einheit 112 ist über die Kupplungsvorrichtung 122 mit dem Radsatz 106 verbunden. Die Kupplung 122 weist einen erste Flansch 126 und einen zweite Flansch 128 auf, die über die fadenverstärkte Gelenkvorrichtung 124 miteinander verbunden sind. Der erste Flansch 126 ist mit der Getriebeausgangswelle 130 des Getriebes 116 über korrespondierende Verzahnungen (nicht gezeigt) gekoppelt. Der zweite Flansch 128 ist auf die Radsatzwelle 110 aufgepresst, um eine drehfeste Verbindung mit der Radsatzwelle 110 herzustellen.

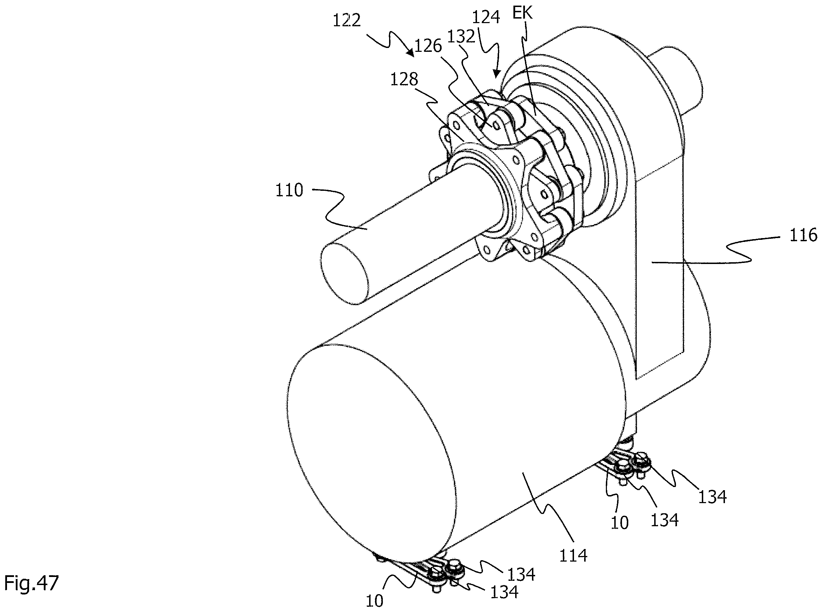

Figur 47 zeigt eine perspektivische Ansicht der Motor-Getriebe-Einheit 112, der Radsatzwelle 110 und einer Kupplungsvorrichtung 122. Die Kupplungsvorrichtung 122 weist die fadenverstärkten Gelenkvorrichtung 124 auf. Die in Figur 47 gezeigte fadenverstärkte Gelenkvorrichtung 124 wird von einer Laschenkupplung gebildet. Die fadenverstärkten Gelenkvorrichtung 124 setzt sich aus mehreren fadenverstärkten Koppelungselementen 132 zusammensetzen. Die Kupplungselemente 132 stellen eine Verbindung zwischen dem ersten Flansch 126 und dem zweiten Flansch 128. Der erste Flansch 126 und der zweite Flansch 128 sind an der gleichen axialen Seite der fadenverstärkten Gelenkvorrichtung 124 angeordnet. An der Motor-Getriebe-Einheit 112 sind ferner die Lagerelemente 10 angeordnet. Die Lagerelemente 10 sind mit Verbindungselementen 134 versehen. Die Verbindungselemente 134 können Schrauben sein und dienen zur Verbindung der Lagerelemente 10 mit dem Drehgestell 1000 (siehe Figur 45). Die Verbindungsmittel 134 erstrecken sich in x-Richtung.

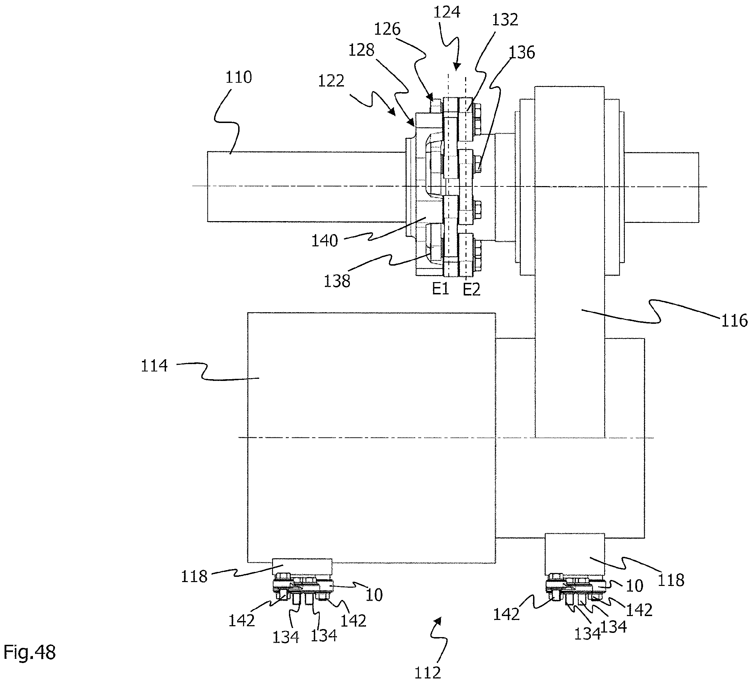

Figur 48 zeigt eine Draufsicht der Motor-Getriebe-Einheit 112, der Radsatzwelle 110 und der Kupplungsvorrichtung 122. Die Kupplungsvorrichtung 122 weist den ersten Flansch 126 und den zweiten Flansch 128 auf. Der Flansch 126 ist über eine Verzahnung mit einer Getriebeausgangswelle 130 des Getriebes 116 gekoppelt. Der Flansch 128 ist mit der Radsatzwelle 110 gekoppelt. Der Flansch 126 und der Flansch 128 sind über eine fadenverstärkte Gelenkvorrichtung 124 miteinander verbunden. Die fadenverstärkte Gelenkvorrichtung 124 setzt sich aus mehreren Kupplungselementen 132 zusammen. Die Kupplungselemente 132 weisen jeweils einen elastischen Körper EK auf, in den ein Fadenpaket (nicht gezeigt) eingebettet sein kann. Die Kupplungselemente 132 werden über Verbindungselemente 136 wie zum Beispiel Schrauben mit dem Flansch 126 und dem Flansch 128 verbunden. Jeweils ein Verbindungselement 136 fixiert zwei in axialer Richtung abschnittsweise aneinander anliegende Kupplungselemente 132 an einem entsprechenden Flanscharm 138 oder 140. Die Verbindungselemente 134 erstrecken sich in axialer Richtung durch die fadenverstärkte Gelenkvorrichtung 10 in die Flanscharme 138, 140 hinein. Die Kupplungselemente 132 sind in zwei Ebenen E1 und E2 an den Flanscharmen 138 und 140 angeordnet und über die Verbindungselemente 136 an den Flanscharmen 138 und 140 befestigt. Die Flanscharme 38 des Flansches 126 umgreifen den Flansch 128, um mit der fadenverstärkten Gelenkvorrichtung 122 gekoppelt werden zu können.

Die Motor-Getriebe-Einheit 112 ist über die Kupplung 130 mit der Radsatzwelle 110 verbunden. An dem Motor 114 und dem Getriebe 116 sind Lagerabschnitte 118 vorgesehen. Die Lagerabschnitte 118 sind über die Verbindungselemente 134 wie zum Beispiel Schrauben mit einem Sechskantkopf mit den Lagerelementen 10 verbunden. Die Lagerelemente 10 sind ferner mit Verbindungselementen 142 versehen, die ebenfalls Schrauben sein können. Die Verbindungselemente 142 können die Motor-Getriebe-Einheit 112 mit dem Rahmenelement 104 (siehe Figuren 44 und 45) verbinden. Über die Lagerelemente 10 und die Verbindungselemente 134, 142 wird die Motor-Getriebe-Einheit 112 mit dem Drehgestell 1000 verbunden.

## Patentansprüche

1. Kupplungsvorrichtung (220) für einen Fahrzeugantrieb, insbesondere für den Antrieb eines Schienenfahrzeugs, mit
- wenigstens einem Flansch (222), wobei der wenigstens eine Flansch (222) einen Befestigungsabschnitt (242) aufweist, über den der wenigstens eine Flansch (222) mit einem Getriebe (214) koppelbar ist,
- wenigstens einer Verbindungseinrichtung (VE), wobei die wenigstens eine Verbindungseinrichtung (VE) wenigstens einen Befestigungsabschnitt (260) aufweist, über den die wenigstens eine Verbindungseinrichtung (VE) mit wenigstens einem abgetriebenen Element (218) koppelbar ist,
- wenigstens einer fadenverstärkten Gelenkvorrichtung (232), die den Flansch (222) und die Verbindungseinrichtung (VE) miteinander verbindet,
wobei der wenigstens eine Flansch (222) und die wenigstens eine Verbindungseinrichtung (VE) jeweils wenigstens eine Befestigungsfläche (254, 262, 268, 270) aufweisen, an der die wenigstens eine fadenverstärkte Gelenkvorrichtung (232) befestigt ist, wobei der wenigstens eine Flansch (222), die wenigstens eine Verbindungseinrichtung (VE) und die wenigstens eine fadenverstärkte Gelenkvorrichtung (232) derart ausgebildet sind, dass die Kupplungsvorrichtung (220) eine vorbestimmte radiale Steifigkeit aufweist, **dadurch gekennzeichnet, dass** die wenigstens eine fadenverstärkte Gelenkvorrichtung (232) eine Mehrzahl an Buchsen, wenigstens ein Fadenpaket und wenigstens einen elastischen Körper aufweist, wobei die vorbestimmte radiale Steifigkeit durch die Ausbildung des wenigstens einen Fadenpakets und durch die Anordnung des wenigstens einen Fadenpakets in dem wenigstens einen elastischen Körper einstellbar ist.

2. Kupplungsvorrichtung (220) nach Anspruch 1,
wobei die wenigstens eine Verbindungseinrichtung (VE) einen Flansch (224) aufweist, wobei der wenigstens eine Flansch (222) zur Kopplung mit dem Getriebe einen ersten Flansch (222) und der wenigstens eine Flansch (224) der Verbindungseinrichtung (VE) einen zweiten Flansch (224) bildet.

3. Kupplungsvorrichtung (220) nach Anspruch 2,
wobei die Befestigungsflächen (254, 262, 268, 270) des ersten Flansches (222) und des zweiten Flansches (224) in einer Ebene liegen, wobei die Befestigungsflächen (254, 262, 268, 270) des ersten Flansches (222) und des zweiten Flansches (224) derselben axialen Seite der wenigstens einen fadenverstärkten Gelenkvorrichtung (232) zugewandt sind, wobei der Befestigungsabschnitt (242) des Flansches (222) und der Befestigungsabschnitt (260) des zweiten Flansches (224) in axialer Richtung zueinander versetzt sind.

4. Kupplungsvorrichtung (220) nach Anspruch 2 oder 3,
wobei der erste Flansch (222) den zweiten Flansch (224) zur Kopplung mit der fadenverstärkten Gelenkvorrichtung (232) umgreift.

5. Kupplungsvorrichtung (220) nach einem der Ansprüche 2 bis 4,
wobei der erste Flansch (222) eine Vielzahl von Flanscharmen (238) aufweist, wobei die Flanscharme (238) sich ausgehend von dem Befestigungsabschnitt (242) in Richtung der fadenverstärkten Gelenkvorrichtung (232) erstrecken, wobei jeder Flanscharm (238) wenigstens eine Befestigungsfläche (254, 268) aufweist, und/oder wobei der zweite Flansch (224) eine Vielzahl von Flanscharmen (240) aufweist, wobei die Flanscharme (240) sich ausgehend von dem Befestigungsabschnitt (260) in Richtung der fadenverstärkten Gelenkvorrichtung (232) erstrecken, wobei jeder Flanscharm (240) wenigstens eine Befestigungsfläche (262, 270) aufweist.

6. Kupplungsvorrichtung (220) nach einem der Ansprüche 2 bis 5,
wobei jeder Flanscharm (238) des ersten Flansches (222) einen sich in axialer Richtung erstreckenden Abschnitt (250) aufweist, an dem wenigstens eine Befestigungsfläche (254) ausgebildet ist.

7. Kupplungsvorrichtung (220) nach Anspruch 6,
wobei die sich in axialer Richtung erstreckenden Abschnitte (250) der Flanscharme (238) des ersten Flansches (222) in Umfangsrichtung der fadenverstärkten Gelenkvorrichtung (232) zwischen den Flanscharmen (238, 240) des zweiten Flansches (224) angeordnet sind.

8. Kupplungsvorrichtung (220) nach einem der Ansprüche 2 bis 7,
wobei die fadenverstärkte Gelenkvorrichtung (232) über Befestigungsmittel (236, 274) mit dem ersten Flansch (222) und dem zweiten Flansch (224) gekoppelt ist, wobei sich die Befestigungsmittel (236, 274) ausgehend von einer axialen Seite der fadenverstärkten Gelenkvorrichtung (232) durch die fadenverstärkte Gelenkvorrichtung (232) in Richtung der Befestigungsflächen (254, 268) des ersten Flansches (222) und des zweiten Flansches (224) an der entgegengesetzten axialen Seite der fadenverstärkten Gelenkvorrichtung (232) erstrecken.

9. Kupplungsvorrichtung (220) nach einem der Ansprüche 2 bis 8,
wobei sich der Befestigungsabschnitt (260) des zweiten Flansches (224) durch die fadenverstärkte Gelenkvorrichtung (232) erstreckt, und/oder
wobei der Innendurchmesser des Befestigungsabschnitts (242) des ersten Flansches (222) größer als der Innendurchmesser des Befestigungsabschnitts (60) des zweiten Flansches (224) ist.

10. Kupplungsvorrichtung (220) nach einem der Ansprüche 2 bis 9,
wobei der Befestigungsabschnitt (242) des ersten Flansches (222) eine Verzahnung (28) aufweist.

11. Kupplungsvorrichtung (220) nach einem der Ansprüche 5 bis 10,
wobei jeder Flanscharm (238, 240) des ersten Flansches (222) und des zweiten Flansches (224) jeweils eine erste und eine zweite Befestigungsfläche (254, 268, 262, 270) aufweist, wobei die ersten Befestigungsflächen (254, 268) an einer axialen Seite der Flanscharme (238, 240) und die zweiten Befestigungsflächen (268, 270) an der entgegengesetzten axialen Seite der Flanscharme (238, 240) ausgebildet sind.

12. Kupplungsvorrichtung (220) nach Anspruch 1,
wobei die wenigstens eine Verbindungseinrichtung (VE) eine Vielzahl von Verbindungselementen (284) aufweist, die zur Verbindung mit dem abgetriebenen Element (278, 280) dienen.

13. Kupplungsvorrichtung (220) nach einem der Ansprüche 1 bis 12,
wobei die fadenverstärkte Gelenkvorrichtung (232) eine Vielzahl von Kupplungskörpern (234, 272) aufweist, und/oder
wobei die fadenverstärkte Gelenkvorrichtung (232) einen Laschenring oder eine Gelenkscheibe aufweist.

14. Drehgestell (1000) mit einer Kupplungsvorrichtung (20) nach einem der Ansprüche 1 bis 13, wobei das Drehgestell eine Motor-Getriebe-Einheit (112, 210) aufweist, wobei die Motor-Getriebe-Einheit (112, 210) über wenigstens ein fadenverstärktes Lagerelement (10) oder über wenigstens ein Federelement (216) an dem Drehgestell (1000) gelagert sind, wobei das wenigstens eine fadenverstärkte Lagerelement (74, 76) wenigstens ein Fadenpaket (74, 76) aufweist, das zumindest teilweise in einen elastischen Körper (12) eingebettet ist, wobei das wenigstens eine fadenverstärkte Lagerelement (10) derart ausgebildet ist, dass das fadenverstärkte Lagerelement (10) in x-, y- und z-Richtung jeweils eine vorbestimmte Steifigkeit bereitstellt, wobei sich die von dem wenigstens einen fadenverstärkten Lagerelement bereitgestellten Steifigkeiten zumindest in zwei Richtungen der x-, y- und z-Richtungen unterscheiden.

15. Drehgestell (1000) nach Anspruch 14, wobei das Drehgestell (1000) einen Radsatz (276) mit einer Radsatzwelle (218) und zwei Rädern (278, 280) aufweist, wobei die Verbindungseinrichtung (VE) die Kupplungsvorrichtung (220) mit der Radsatzwelle (218) oder einem der beiden Räder (278, 280) koppelt.

16. Drehgestell (1000) nach Anspruch 14 oder 15,
wobei das fadenverstärkte Lagerelement (10) wenigstens zwei Fadenpakete (74, 76) aufweist, wobei sich die wenigstens zwei Fadenpakete (74, 76) mit einem vorbestimmten Winkel (α) zueinander erstrecken, insbesondere einem vorbestimmten Winkel (α) zwischen 5° und 175°, der vorzugsweise ein spitzer Winkel ist.

17. Schienenfahrzeug mit einem Drehgestell (1000) nach einem der Ansprüche 14 bis 16.

## Claims

1. A coupling device (220) for a vehicle drive, in particular for the propulsion of a rail vehicle, comprising
- at least one flange (222), the at least one flange (222) having a mounting portion (242) through which the at least one flange (222) can be coupled to a gearbox (214),
- at least one connecting device (VE), the at least one connecting device (VE) having at least one mounting portion (260) through which the at least one connecting device (VE) can be coupled to at least one output member (218),
- at least one thread-reinforced joint device (232) connecting the flange (222) and the connecting device (VE) to each other,
the at least one flange (222) and the at least one connecting device (VE) each having at least one mounting surface (254, 262, 268, 270) to which the at least one thread-reinforced joint device (232) is mounted, the at least one flange (222), the at least one connecting device (VE) and the at least one thread-reinforced joint device (232) being configured such that the coupling device (220) has a predetermined radial stiffness, **characterized in that** the at least one thread-reinforced joint device (232) comprises a plurality of sockets, at least one thread package and at least one elastic body, wherein the predetermined radial stiffness is adjustable by forming the at least one thread package and by arranging the at least one thread package in the at least one elastic body.

2. The coupling device (220) of claim 1,
the at least one connecting device (VE) having a flange (224), the at least one flange (222) forming a first flange (224) for coupling to the gearbox and the at least one flange (224) of the connecting device (VE) forming a second flange (224).

3. The coupling device (220) of claim 2,
the mounting surfaces (254, 262, 268, 270) of the first flange (222) and of the second flange (224) being coplanar, the mounting surfaces (254, 262, 268, 270) of the first flange (222) and of the second flange (224) facing the same axial side of the at least one thread-reinforced joint device (232), the mounting portion (242) of the flange (222) and the mounting portion (260) of the second flange (224) being offset to one another in the axial direction.

4. The coupling device (220) of claim 2 or 3,
the first flange (222) embracing the second flange (224) for coupling the thread-reinforced joint device (232).

5. The coupling device (220) of any one of claims 2 to 4,
the first flange (222) having a plurality of flange arms (238), the flange arms (238) extending from the mounting portion (242) toward the thread-reinforced joint device (232), each flange arm (238) having at least one mounting surface (254, 268), and/or the second flange (224) having a plurality of flange arms (240), the flange arms (240) extending from the mounting portion (260) toward the thread-reinforced joint device (232), each flange arm (240) having at least one mounting surface (262, 270).

6. The coupling device (220) of any one of claims 2 to 5,
each flange arm (238) of the first flange (222) having an axially extending portion (250) on which at least one mounting surface (254) is formed.

7. The coupling device (220) of claim 6,
the axially extending portions (250) of the flange arms (238) of the first flange (222) being arranged in the circumferential direction of the thread-reinforced joint device (232) between the flange arms (238, 240) of the second flange (224).

8. The coupling device (220) of any one of claims 2 to 7,
the thread-reinforced joint device (232) being coupled to the first flange (222) and the second flange (224) through fasteners (236, 274), the fasteners (236, 274) extending from an axial side of the thread-reinforced joint device (232) through the thread-reinforced joint device (232) toward the mounting surfaces (254, 268) of the first flange (222) and the second flange (224) on the opposite axial side of the thread-reinforced joint device (232).

9. The coupling device (220) of any one of claims 2 to 8,
the mounting portion (260) of the second flange (224) extending through the thread-reinforced joint device (232), and/or the inner diameter of the mounting portion (242) of the first flange (222) being larger than the inner diameter of the mounting portion (60) of the second flange (224).

10. The coupling device (220) of any one of claims 2 to 9,
the mounting portion (242) of the first flange (222) having a toothing (28).

11. The coupling device (220) of any one of claims 5 to 10,
each flange arm (238, 240) of the first flange (222) and the second flange (224) having first and second mounting surfaces (254, 268, 262, 270), the first mounting surfaces (254, 268) being configured on one axial side of the flange arms (238, 240) and the second mounting surfaces (268, 270) being configured on the opposite axial side of the flange arms (238, 240).

12. The coupling device (220) of claim 1,
the at least one connecting device (VE) having a plurality of connecting members (284) serving for connection to the output member (278, 280).

13. The coupling device (220) of any one of claims 1 to 12,
the thread-reinforced joint device (232) having a plurality of coupling bodies (234, 272), and/or
the thread-reinforced joint device (232) having a link assembly or a joint disc.

14. A bogie (1000) having a coupling device (20) of any one of claims 1 to 13, the bogie comprising a motor-gear unit (112, 210), the motor-gear unit (112, 210) being supported on the bogie (1000) through at least one thread-reinforced bearing member (10) or through at least one spring member (216), the at least one thread-reinforced bearing member (74, 76) having at least one thread package (74, 76) that is at least partially embedded in an elastic body (12), the at least one thread-reinforced bearing member (10) being configured such that the thread-reinforced bearing member (10) provides a predetermined stiffness in each of the x, y and z directions, the stiffness provided by the at least one thread-reinforced bearing member differing at least in two directions of the x, y and z directions.

15. The bogie (1000) of claim 14, the bogie (1000) comprising a wheel set (276) having a wheel set shaft (218) and two wheels (278, 280), the connecting device (VE) coupling the coupling device (220) to the wheel set shaft (218) or one of the two wheels (278, 280).

16. The bogie (1000) of claim 14 or 15,
the thread-reinforced bearing member (10) comprising at least two thread packages (74, 76), the at least two thread packages (74, 76) extending toward each other at a predetermined angle (α), in particular at a predetermined angle (α) ranging between 5° and 175°, which is preferably an acute angle.

17. A rail vehicle comprising a bogie (1000) of any one of claims 14 to 16.

## Revendications

1. Dispositif d'accouplement (220) pour un entraînement d'un véhicule, notamment pour l'entraînement d'un véhicule ferroviaire, équipé
- d'au moins une bride (222), ledit au moins une bride (222) comprenant une section de fixation (242), par l'intermédiaire de laquelle l'au moins une bride (222) peut être accouplée à une transmission (214),
- d'au moins un dispositif de liaison (VE), ledit au moins un dispositif de liaison comprenant au moins une section de fixation (260) par l'intermédiaire de laquelle l'au moins un dispositif de liaison (VE) peut être accouplé à au moins un élément entrainé (218),
- au moins un dispositif d'articulation renforcé de fils (232), qui relie la bride (222) et le dispositif de liaison (VE),
- l'au moins une bride (222) et l'au moins un dispositif de liaison (VE) comprenant chacun au moins une surface de fixation (254, 262, 268, 270) sur laquelle est fixé l'au moins un dispositif d'articulation renforcé de fils (232), l'au moins une bride (222), l'au moins un dispositif de liaison (VE)et l'au moins un dispositif d'articulation renforcé de fils (232) étant conçus de telle sorte que le dispositif d'accouplement (220) présente une rigidité radiale prédéterminé, **caractérisé en ce que** l'au moins un dispositif d'articulation renforcé de fils (232) comprend une pluralité de douilles, au moins un paquet de fils et au moins un corps élastique, la rigidité radiale prédéterminé étant réglable par la forme de l'au moins un paquet de fils et par l'agencement de l'au moins un paquet de fils dans l'au moins un corps élastique.

2. Dispositif d'accouplement (220) selon la revendication 1, dans lequel l'au moins un dispositif de liaison (VE) comprend une bride (224), dans lequel l'au moins une bride (222) pour l'accouplement avec la transmission forme une première bride (222) et l'au moins bride (224) du dispositif de liaison (VE) forme une deuxième bride (224).

3. Dispositif d'accouplement (220) selon la revendication 2, dans lequel les surfaces de fixation (254, 262, 268, 270) de la première bride (222) et de la deuxième bride (224) se trouve dans un plan, les surfaces de fixation (254 ; 262, 268, 270) de la première bride (222) et de la deuxième bride (224) faisant face au même côté axial de l'au moins dispositif d'articulation renforcé de fils (232), dans lequel la section de fixation (242) de la bride (222) et la section de fixation (260) de la deuxième bride (224) étant décalées les unes par rapport aux autres en direction axiale.

4. Dispositif d'accouplement (220) selon la revendication 2 ou 3, dans lequel la première bride (222) entoure la deuxième bride (224) pour l'accouplement avec le dispositif d'articulation renforcé de fils (232).

5. Dispositif d'accouplement (220) selon l'une des revendication 2 à 4, dans lequel
la première bride (222) comprend une pluralité de bras de bride (238), les bras de bride (238) s'étendant à partir de la section de fixation (242) vers le dispositif d'articulation renforcé de fils (232), dans lequel chaque bras de bride (238) comprend au moins une surface de fixation (254, 268), et/ou dans lequel la deuxième bride (224) comprend une pluralité de bras de bride (240), les bras de bride (240) s'étendent à partir de la section de fixation (260) vers le dispositif d'articulation renforcé de fils (232), dans lequel chaque bras de bride (240) comprend au moins une surface de fixation (262, 270).

6. Dispositif d'accouplement (220) selon l'une des revendication 2 à 5, dans lequel
chaque bras de bride (238) de la première bride comprend une section (250) s'étendant en direction axiale, sur laquelle est formée au moins une surface de fixation (254).

7. Dispositif d'accouplement (220) selon la revendication 6, dans lequel les sections (250) des bras de bride (238) de la première bride (222) s'étendent en direction axiale étant disposées dans la direction circonférentielle du dispositif d'articulation renforcé de fils (232) entre les bras de bride (238, 240) de la deuxième bride (224).

8. Dispositif d'accouplement (220) selon l'une des revendication 2 à 7, dans lequel
le dispositif d'articulation renforcé de fils (232) est accouplé par des moyens de fixation (236, 274) à la première bride (222) et la deuxième bride (224), dans lequel les moyens de fixation (236, 274) s'étendent à partir d'un côté axial du dispositif d'articulation renforcé de fils (232) à travers le dispositif d'articulation renforcé de fils (232) en direction des surfaces (254, 268) de la première bride (222) et de la deuxième bride (224) au côté axial opposé du dispositif d'articulation renforcé de fils (232).

9. Dispositif d'accouplement (220) selon l'une des revendication 2 à 8, dans lequel
la section de fixation (260) de la deuxième bride (224) s'étend à travers le dispositif d'articulation renforcé de fils (232), et/ou dans lequel le diamètre intérieure de la section de fixation (242) de la première bride (222) est supérieure au diamètre intérieur de la section de fixation (60) de la seconde bride (224).

10. Dispositif d'accouplement (220) selon l'une des revendication 2 à 9, dans lequel
la section de fixation (242) de la première bride comprend une denture (28).

11. Dispositif d'accouplement (220) selon l'une des revendication 5 à 10, dans lequel
chaque bras de bride (238, 240) de la première bride (222) et de la deuxième bride (224) comprennent chacun une première et deuxième surfaces de fixation (254, 268, 262, 270), dans lequel les premières surfaces de fixation (254, 268) sont conçus sur un côté axial des bras de bride (238, 240) et les deuxièmes surfaces de fixation (268, 270) sur le côté axial opposé des bras de bride (238, 240).

12. Dispositif d'accouplement (220) selon la revendication 1,
dans lequel l'au moins un dispositif de liaison (VE) comprend une pluralité d'éléments de liaison (284) servant à la liaison avec l'élément entraîné (278, 280).

13. Dispositif d'accouplement (220) selon l'une des revendication 1 à 12,
dans lequel le dispositif d'articulation renforcé de fils (232) comprend une pluralité de corps d'accouplement (232, 272), et/ou
dans lequel le dispositif d'articulation renforcé de fils (232) comprend une bague à patte ou un disque de joint.

14. Bogie (1000) muni d'un dispositif d'accouplement (20) selon l'une des revendications 1 à 13, dans lequel le bogie comprend une unité moteur-transmission (112, 210), dans lequel l'unité moteur transmission étant disposée par l'intermédiaire d'un élément de palier renforcé de fils (10) ou par l'intermédiaire d'au moins un élément ressort (216) au bogie (1000), dans lequel l'au moins un élément de palier renforcé par des fils (74, 76) comprend au moins un paquet de fils (74, 76) étant partiellement incorporé dans un corps élastique (12), dans lequel l'au moins un élément de liaison renforcé de fils (10) est conçu de telle sorte que l'élément de palier renforcé de fils (10) fournit une rigidité prédéterminée en direction x, y et z, dans lequel les rigidités fournies par l'au moins un élément de palier renforcé de fils se différencient dans au moins deux directions parmi les directions x, y et z.

15. Bogie (1000) selon la revendication 14, dans lequel le bogie (1000) comprend un essieu (276) avec un arbre d'essieu (218) et deux roues (278, 280), dans lequel le dispositif de liaison (VE) accouple le dispositif d'accouplement (220) l'arbre d'essieu (218) ou à l'une des deux roues (278, 280).

16. Bogie (1000) selon la revendication 14 ou 15, dans lequel l'élément de palier renforcé de fils (10) comprend au moins deux paquets de fils (74, 76), dans lequel les au moins deux paquets de fils (74, 76) s'étendent avec un angle (α) prédéterminé l'un à l'autre, notamment un angle (α) prédéterminé entre 5° et 175 qui est de préférence un angle aigu.

17. Véhicule ferroviaire avec un bogie (1000) selon une des revendication 14 à 16.
